# EUROPEAN PATENT SPECIFICATION

(11) **EP 4 399 889 B1**
(45) Date of publication and mention of the grant of the patent: **17.06.2026**
(21) Application number: 22867986.6
(22) Date of filing: 07.09.2022
(51) Int. Cl.: H04W 4/42, H04W 12/08, H04W 12/122

(54) **REAL-TIME CYBERSECURITY MONITORING OF INFLIGHT ENTERTAINMENT SYSTEMS**
CYBERSICHERHEITSÜBERWACHUNG IN ECHTZEIT VON UNTERHALTUNGSSYSTEMEN WÄHREND DES FLUGES
SURVEILLANCE DE CYBERSÉCURITÉ EN TEMPS RÉEL DE SYSTÈMES DE DIVERTISSEMENT EN VOL

(30) Priority: 08.09.2021 US 202117469465
(43) Date of publication of application: 17.07.2024
(73) Proprietor: Thales Avionics, Inc., Irvine, CA 92618-3105 (US)
(72) Inventor: SUMIEN, Arnaud, Mission Viejo, California 92691 (US); MOTZ, Russell William, Melbourne Beach, Florida 32951 (US)
(74) Representative: Kraus & Lederer PartGmbB
(86) International application number: PCT/US2022/042732
(87) International publication number: WO 2023/038953

(56) References cited:
- CN-A- 111 488 222
- US-A1- 2014 230 062
- US-A1- 2020 076 849
- US-A1- 2020 092 308
- US-A1- 2020 178 071
- US-A1- 2020 178 071
- US-A1- 2020 298 975
- US-A1- 2021 014 256

## Description

### FIELD

The present disclosure relates to inflight entertainment systems and monitoring cybersecurity events related to operation of inflight entertainment systems.

### BACKGROUND

Modem aircraft include a variety of electronic and computer systems to operate the aircraft and provide inflight entertainment (IFE) services to passengers. Aircraft typically include a satellite communications (SATCOM) system which enables aircraft systems to communicate through satellites and gateways with ground network nodes, such as content servers. Aircraft networks and systems can unexpectedly provide a conduit by which malicious entities, e.g., hackers, can attempt to gain unauthorized access to the onboard and offboard systems. In an attempt to prevent such unauthorize access, aircraft can employ various security controls, such as network firewalls, which attempt to control access to data networks and to prevent unauthorized access to critical and sensitive systems.

In addition to unauthorized access, services provided to passengers through the IFE system can also be used by malicious entities to attempt to access information deemed risky or harmful and/or to communicate to other malicious entities wishing harm to the aircraft and or its passengers. Additionally, these bad actors can attempt to obfuscate their use of the IFE system to hide such actions. Likewise, bad actors may try to use the IFE system to commit fraudulent or illegal acts. Components of the IFE system deployed on the aircraft and/or on the ground as part of the network provide both policy access and content filtering as well as user identification to help restrict these potentially risky activities. Further IFE systems and related cybersecurity systems are disclosed in patent application documents US 2020/076849 A1, US 2020/298975 A1, US 2020/178071 A1 and US 2020/092308 A1.

The security controls, however, do not provide an effective real-time operation for detecting, analyzing, and tracking attempted breaches or taking remedial actions. Conventional aircraft-based cybersecurity operations create raw event log files that record content of log event streams generated by aircraft systems. The raw event log files are accumulated during flight and then downloaded through a removable physical media that is transported off the aircraft by crew or are communicated through WiFi or cellular modem at an airport gate. Because of size of raw event log files it has been cost prohibitive to communicate raw event log files through the satellite communication pathway. There is therefore a need for methods and systems for providing real-time monitoring, analysis, detecting and track of attempted breaches and other security events arising with aircraft systems.

### SUMMARY

Embodiments of the present disclosure are directed to providing an aircraft-based inflight entertainment (IFE) security processing system and ground-based cybersecurity operations center (CSOC) which enable real-time monitoring, analysis, detection, tracking, and remedial actions against attempted breaches and other security events arising with aircraft systems.

Some embodiments of the present disclosure are directed to the IFE security processing system which includes at least one processor and at least one memory storing instructions executable by the at least one processor to perform operations. The operations receive log event streams from components of an IFE system and/or which are connected to the IFE system. The operations aggregate content of the log event streams based on a level of aggregation set by aggregation commands received from the ground-based CSOC, to generate an aggregated log file. The aggregated log file is communicated through a satellite communication pathway to the ground-based CSOC.

Some other embodiments of the present disclosure are directed to the ground-based CSOC which includes at least one processor and at least one memory storing instructions executable by the at least one processor to perform operations. The operations receive an aggregated log file through a satellite communication pathway from the IFE security processing system. The operations process the aggregated log file to identify a security event satisfying at least one defined security rule. Responsive to identifying the security event, the operations generate an aggregation command to control aggregation by the IFE security processing system of content of log event streams from components of an IFE system to generate an updated aggregated log file. The operations communicate the aggregation command through the satellite communication pathway to the IFE security processing system.

Some further embodiments are directed to the CSOC controlling the IFE security processing system's correlation of content of the log event streams based on a correlation rule having parameters defined based on correlation commands received from the ground-based cybersecurity operations center. In one embodiment, the CSOC controls the time interval over which content of individual ones of the log event streams are correlated to generate the aggregated log file to be reported to the CSOC. In another embodiment, the CSOC controls a level of aggregation performed by the IFE security processing system on content of a raw log file which stores content of log event streams.

Other aircraft-based IFE security processing systems and ground-based control CSOCs, and related methods, and computer program products according to embodiments of the inventive subject matter will be or become apparent to one with skill in the art upon review of the following drawings and detailed description. It is intended that all such additional aircraft-based IFE security processing systems and ground-based control CSOCs, and related methods, and computer program products be included within this description, be within the scope of the present inventive subject matter, and be protected by the accompanying claims. Moreover, it is intended that all embodiments disclosed herein can be implemented separately or combined in any way and/or combination.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
Figure 1 illustrates example component systems of an aircraft which includes an IFE security processing system that communicates through a satellite network with a ground-based IFE applications security system and a ground-based cybersecurity operations center in accordance with some embodiments of the present disclosure;
Figure 2 illustrates a further block diagram of the aircraft systems, the ground-based IFE applications security system, and the ground-based cybersecurity operations center (CSOC) of Figure 1 which are configured according to some embodiments of the present disclosure;
Figure 3 illustrates a block diagram of processing operations performed by the aircraft-based IFE security processing system on incoming log event streams to report to the ground-based CSOC of Figures 1 and 2 in accordance with some embodiments of the present disclosure;
Figure 4 illustrates a data flow diagram and operations by the aircraft-based IFE security processing system and the ground-based CSOC in accordance with some embodiments of the present disclosure;
Figures 5-8 are flowcharts of operations that can be performed by the aircraft-based IFE security processing system in accordance with some embodiments of the present disclosure;
Figure 9 illustrates an example computer generated display layout by the ground-based CSOC which shows a geographic map with an overlaid security related notification for an inflight aircraft in accordance with some embodiments of the present disclosure;
Figure 10 illustrates example attack scenarios that can be detected and reported in real-time by the aircraft-based IFE security processing system to the ground-based CSOC through the satellite communication pathway in accordance with some embodiments of the present disclosure;
Figure 11 illustrates a block diagram of processing operations performed by the IFE applications security system on incoming log event streams and user actions originating from the aircraft systems, and which results in reporting to the CSOC of Figures 1 and 2 in accordance with some embodiments of the present disclosure;
Figure 12 illustrates a block diagram of operations performed by the aircraft-based user activity processing system on incoming log event streams to be processed by the ground-based IFE application security system and to report to the ground-based CSOC of Figures 1 and 2 in accordance with some embodiments of the present disclosure;
Figure 13 illustrates a block diagram of operations performed by the aircraft-based user activity processing system on incoming user action requests to be processed by the ground-based IFE Application Security System as an input to report to the ground-based CSOC of Figures 1 and 2 in accordance with some embodiments of the present disclosure;
Figure 14 illustrates a block diagram of operations performed by the aircraft-based user activity processing system on incoming user Internet access requests which are to be processed by the ground-based IFE application security system as an input to report to the ground-based CSOC of Figures 1 and 2 in accordance with some embodiments of the present disclosure;
Figure 15 illustrates a block diagram of processing operations performed by the ground-based risk assessment module to report to the ground-based CSOC of Figures 1 and 2 in accordance with some embodiments of the present disclosure;
Figure 16 illustrates a CSOC display illustrating a threat risk display based on user behavior analytics in accordance with some embodiments of the present disclosure; and
Figure 17 illustrates a block diagram of operations for assessment and security risk identification based on processing IFE internet access requests through web content filtering and policy definitions in accordance with some embodiments of the present disclosure.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of various present inventive concepts to those skilled in the art. It should also be noted that these embodiments are not mutually exclusive. Components from one embodiment may be tacitly assumed to be present or used in another embodiment.

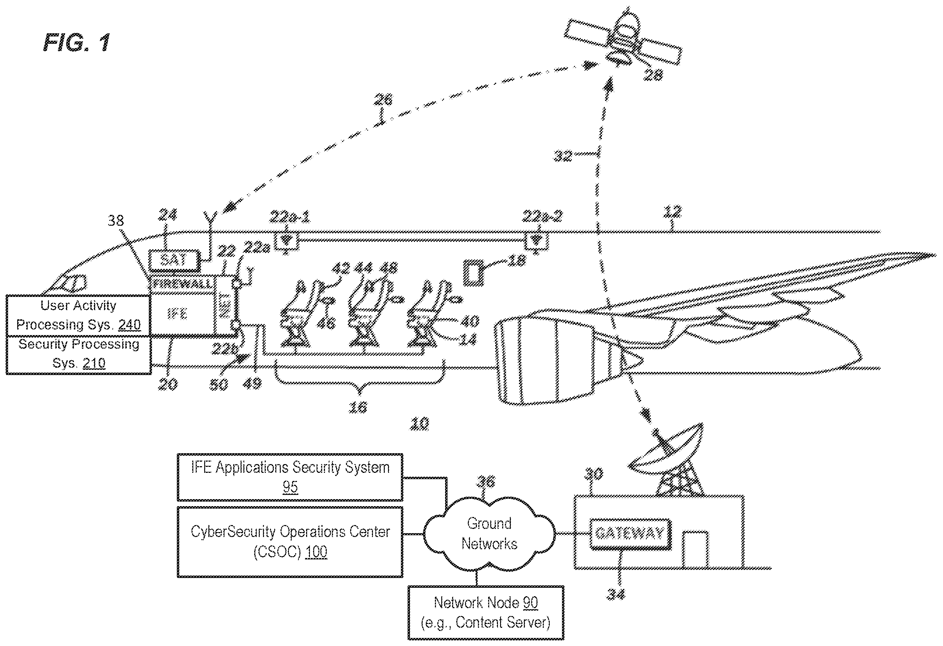

Figure 1 illustrates example component systems of an aircraft which includes an IFE security processing system which communicates through a satellite network with a ground-based cybersecurity operations center (CSOC) in accordance with some embodiments of the present disclosure. Within a fuselage 12 of the aircraft 10, there may be seats 14 arranged over multiple rows 16, with each seat 14 accommodating a single passenger. One or more passengers may utilize a portable electronic device (PED) 18 during flight. Example PEDs 18 include smart phones, tablet computers, laptop computers, and other devices that include a processor which executes pre-programmed instructions (e.g., user applications). Although these PEDs are most often brought on board the aircraft 10 by the passengers themselves, airline carriers may also offer them to the passengers for temporary use.

The aircraft 10 incorporates an inflight entertainment and communications (IFE) server 20. One of its components is a data communications network 22. Almost all conventional PEDs 18 have a WLAN (WiFi) module, so the network 22 of the IFE system 20 includes WLAN access points 22a, 22a-I and 22a-2 spaced apart within the fuselage 12 and connected to the data communications network 22 via, e.g., a wired network such as wired Ethernet. The PED 18, via the onboard WLAN network, may connect to the IFE system 20 to access various services offered thereon such as content downloading/viewing, shopping, and so forth.

The IFE server 20 (also referred to as "IFE system") may also offer Internet access to the connecting PEDs 18. One contemplated modality that operates with the IFE server 20 is a satellite communication transceiver 24 that establishes and maintains a broadband data communications link 26 with a communications satellite 28. The link 26 may use Ku-band microwave transmissions. However, any suitable communications satellite 28, such as Inmarsat or Iridium may also be utilized without departing from the present disclosure including other bands, such as Ka-band, C-band and/or X-band. The communications satellite 28 maintains a broadband data communications link 32 with a satellite gateway 30 operated by a communications service provider 30. Bidirectional broadband data communications are performed between the aircraft satellite communication transceiver 24 and the ground satellite gateway 34 via the links 26 and 32. The ground satellite gateway 34 is connected to ground networks 36, such as the Internet and/or private networks. There are numerous types of network nodes 90, e.g., content servers, which are accessible to passengers via the IFE server 20 connected to the satellite 28 and gateway 34. Satellite communication links are a relatively expensive pathway for data traffic.

The PED 18 can connect to the IFE server 20 via one of the WLAN access points 22a, 22a-1, 22a-2 which relays the data transmissions to the satellite communication transceiver 24 for transmission to the communications satellite 28 over the data link 26, and the satellite 28 relays the data to the gateway 34 over the data link 32. The network gateway 34 then routes the transmission to the ground networks 36, e.g., Internet. Data transmissions from network nodes(s) 90 on the Internet to the PED 18 are understood to follow a reverse pathway. Due to the high costs associated with the communications satellite 28 that is passed to the users of the satellite communications, the carrier may use a firewall with limits data traffic to and from the satellite communication transceiver 24 with a firewall 38.

Another way in which the passenger can utilize the services offered through the IFE server 20 are individual seat-based equipment which can include a terminal unit 40, a display (e.g., seat video display unit) 42, an audio output 44, and a remote controller (e.g., passenger control unit) 46. For a given row 16 of seats 14, the terminal unit 40 and the audio output 44 are disposed on the seat 14 for which it is provided, but the display 42 and the remote controller 46 may be disposed on the row 16 in front of the seat 14 to which it is provided. For example, the display 42 and the remote controller 46 can be installed on the seatback of the row in front of the seat. This is by way of example only, and other display 42 and remote controller 46 mounting and access configurations such as a retractable arm or the like mounted to an armrest of the seat 14 or by mounting on a bulkhead.

Each passenger can utilize an individual headset 48, supplied by either the airline or by the passenger, which provides a more private listening experience. In the illustrated embodiment, the audio output 44 is a headphone jack that is a standard ring/tip/sleeve socket. The headphone jack may be proximately located to the display 42 or on the armrest of the seat 14 as shown. The headphone jack may be an active type with noise canceling and including two or three sockets or a standard audio output without noise canceling. Alternatively, short-range wireless communication devices such as Bluetooth transceivers may be provided to connect the headset 48 to the terminal unit 40 and/or the display 42. In alternate embodiments, each display 42 may incorporate a terminal unit 40 to form a display unit (e.g., smart monitor).

A common use for the terminal unit 40 installed on the aircraft is the playback of various multimedia content. The terminal unit 40 includes at least one processor configured to decode the data files corresponding to the multimedia content and generates video and audio signals for the display 42 and the audio output 44, respectively. Multimedia content data files may be stored in one or more repositories associated with the IFE server 20, and each of the terminal units 40 for each seat 14 may be connected thereto over a wired local area network link 49 connected to a wired network interface 22b, e.g., Ethernet switch or router, or via the WLAN access points 22a, 22a-1, 22a-2.

In some embodiments, the terminal units 40 initiate a request for multimedia content to the IFE server 20, where such content may be stored. The data is transmitted to requesting terminal unit 40 over the wired local area network link 49, and most data traffic thus remains local. The terminal units 40 may additionally receive content that is streamed (e.g., IPTV) from one of a content server of one of the ground network nodes 90 through the satellite 28 and temporarily buffered by the IFE server 20. There are several additional applications contemplated that may rely upon a connection to the ground networks 36, in which case the data is passed to the satellite communication transceiver 24 so long as permission has been granted therefor by the firewall 38 in the same manner as described above in relation to the WLAN network and the request originating from the PED 18.

Although it is generally assumed that passengers use the onboard systems without malicious-intent, it is foreseeable that a passenger may attempt to access restricted content and/or services for malicious purposes such as obtaining sensitive data (e.g., other passenger login credentials, credit card information, etc.) and disrupting and/or taking control over those services. Moreover, a passenger may attempt to interfere with operation of components of the aircraft systems, such as through a denial of service attack of the WLAN access points 22a, 22a-I and 22a-2, the wired network 49, etc. Flight-critical avionics systems are physically and logically separated from the onboard local area network 50 carrying passenger data traffic, although some avionics systems may utilize the onboard local area network 50 for operational, administrative, and/or maintenance purposes. Whether done for financial profit or for malicious purpose, attacks against components connected to the onboard local area network 50 are problematic for carriers.

Various embodiments of the present disclosure are directed to enabling real-time monitoring, analysis, detection, tracking, and remedial actions against attempted breaches and other security events arising with aircraft systems using an aircraft-based **IFE** security processing system 210 which operates to control the amount of data traffic communicated to a ground-based cybersecurity operations center (CSOC) 100 through the satellite 28 and gateway 34. As will be explained in further detail below, the ground-based CSOC 100 controls aggregation and correlations operations performed by the aircraft-based IFE security processing system 210 on content of log event streams from components of the aircraft system 200, when generating aggregated log files to be reported to the CSOC 100. The amount of aggregation and correlation is performed when generating the aggregated log files can be dynamically adapted by the aircraft-based IFE security processing system 210 based on commands from the ground-based CSOC 100 so that cost-effective and timely utilization of the satellite communication pathway is performed. For example, while a security event is not detected the content and frequency of reporting of aggregated log files can be reduced. In sharp contrast, when a security event is detected the content and frequency of reporting of aggregated log files can be increased to enable the ground-based CSOC 100 to more accurately identify a possible root cause of the security event and to responsive determine a remedial action that is commanded for the aircraft-based IFE security processing system 210 to perform.

For example, the aircraft-based IFE security processing system 210 can aggregate content of log event streams from components of the aircraft system 200 based on a level of aggregation set by aggregation commands received from the ground-based CSOC 100, to generate an aggregation log file which is reported to the ground-based CSOC 100. The aircraft-based IFE security processing system 210 may be configured with a default level of aggregation which can be overridden by received aggregation commands. The aircraft-based IFE security processing system 210 can also correlate content of the log event streams based on a correlation rule having parameters defined based on correlation commands received from the ground-based cybersecurity operations center. The CSOC 100 can monitor the reported aggregation log files to identify occurrence of a security event, and responsively adapt the aggregation and/or correlation operations by the aircraft-based IFE security processing system 210 to enable enhanced analysis of updated aggregation log file received therefrom. The CSOC 100 may additionally identify and send remedial security action commands to the aircraft-based IFE security processing system 210 to counteract the attempted breach or other security events arising with one or more of the aircraft systems.

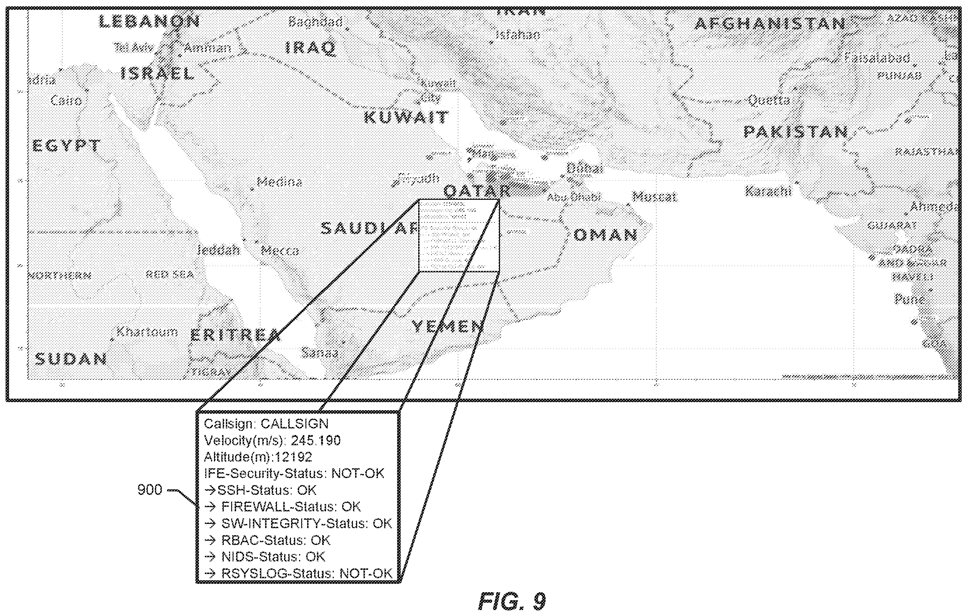

Figure 9 illustrates an example computer generated display layout by the ground-based CSOC 100 which shows a geographic map with an overlaid security related notification 900 for an inflight aircraft which is displayed in accordance with some embodiments of the present disclosure. The security related notification 900 indicates the aircraft's callsign, velocity, altitude, and IFE security status. For the illustrated example, the IFE security status is "NOT-OK" due to the CSOC 100 identifying that content of aggregated log file received from the aircraft satisfies a security event rule. In particular, the RSYSLOG-status is determined to be "NOT-OK" (i.e., indicating detection of a security event) while the SSH-Status, Firewall-status, SW-Integrity-Status, RBAC-Status, and Network Intrusion Detection System (NIDS)-status are each "OK".

The ground-based CSOC 100 can receive aggregation log files from an associated fleet of operating aircraft and can display security statuses that are periodically updated based on analysis of updated aggregation log files from each of the aircraft. A human operator can thereby visually observe the security statuses and, when a problematic security event arises, can assist with identifying a root cause of the security event and determining a remedial action that should be taken by the IFE security processing system of the affected aircraft. Different colors and/or other indicia may be used to visually indicate which, if any aircraft are possibly experiencing a security event.

The CSOC 100 can operate to cross correlate content of aggregation log files received from one aircraft against content of aggregation log files received from other aircraft, such as aircraft operating in a same geographic region, same flight phase, etc. Enabling cross-correlation between the aggregation log files of different aircraft can enable the ground-based CSOC 100 to more accurately detect occurrence of security events. For example, satellite link communication errors reported in aggregation log files from a first aircraft may be determined by the CSOC 100 to have a root cause that is outside the first aircraft based on determining that a second aircraft served by a same satellite relay is experiencing similar communication errors. Similarly, communication errors with a particular ground-based network node (e.g., content server) reported in aggregation log files from a first aircraft may be determined by the CSOC 100 to have a root cause that is outside the first aircraft based on determining that a second aircraft is experiencing similar communication errors with the same ground-based network node or determining that both aircraft are communicating through a same or similar ground network 36 pathway which is experiencing communication problems.

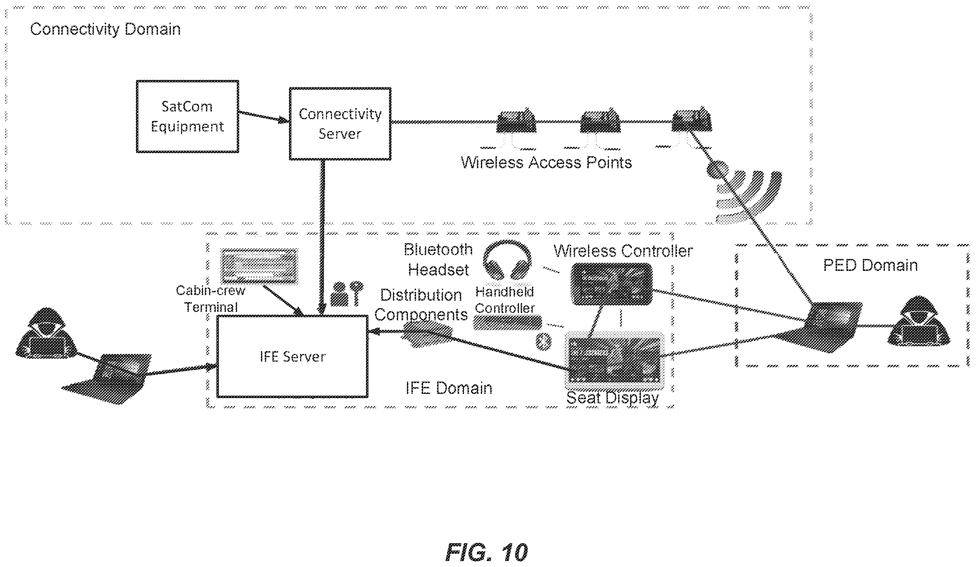

Figure 10 illustrates example attack scenarios that can be detected and reported in real-time by the aircraft-based IFE security processing system 210 to the ground-based CSOC 100 through the satellite networks in accordance with some embodiments of the present disclosure.

Referring to Figure 10, one attack scenario which is illustrated includes where an attacker is attempting to gain unauthorized access to the IFE server. In one approach, the attacker attempts to connect a PED to the IFE server via an Ethernet interface, a USB interface, and/or another interface or communication port of the IFE server, to gain unauthorized access to content and/or a service of the IFE server. If the attacker is successful at gaining unauthorized access to the IFE server, the attacker may deploy malicious software which is configured to report to the attacker other passenger credentials (e.g., bank account login credentials, stream service login credentials, etc.), crew access credentials, credit card information, and other sensitive information. In another approach, the attacker attempts to connect the PED to the IFE server via WiFi communications through the aircraft wireless access points which communicate through a connectivity server with the IFE server. In still another approach, the attacker attempts to connect the PED to the IFE server via WiFi and/or Bluetooth communications through a wireless controller and/or a seat display that is networked through distribution components to the IFE server. In still another approach, the attacker attempts to obtain unauthorized access to the IFE server through a cabin terminal which is configured for restricted crew control of the services provided by the IFE server.

In accordance with various embodiments of the present disclosure, each of the connectivity domain components and IFE domain components can include a security log event reporting module which generates log event streams to the IFE security processing system 210 (Fig. 1) reporting, for example, user access attempts and reporting associated device identifiers and user credentials that were submitted for authentication in an unsuccessful attempt to gain access to components and/or that were submitted in a successful attempt to to gain access to components.

In another attack scenario, the attacker is performing a network scan of data and/or control messaging traffic in-flight between other passenger PEDs and the WiFi and/or Bluetooth wireless access points. The security log event reporting modules of the WLAN access points, the connectivity server, the wireless controller, and/or the seat display can be configured to monitor and report observed SSIDs, SSH (secure shell protocol) activity, and/or other transmissions by or to wireless components of the connectivity domain and the IFE domain. For example, if the attacker configures the PED to spoof the SSID of the wireless access points in an attempt to create a man-in-the-middle attack between the wireless access points and another passenger's PED, the IFE security processing system 210 may be able to identify occurrence of the man-in-the-middle attack based on processing content of the log event streams and/or the CSOC 100 may be able to identify occurrence of the man-in-the-middle attack based on processing content of the aggregated log file received from the IFE security processing system 210.

In still another attack scenario, the attacker is attempting to access ports of the IFE server, restricted content stored on the IFE server, and/or restricted services provided by the IFE server. The firewall 40 can block the attempts while a security log event reporting module associated with the firewall 40 logs information associated with the attempts for security event identification by the IFE security processing system 210 based on processing content of the log event streams and/or for security event identification by the CSOC 100 based on processing content of the aggregated log file received from the IFE security processing system 210.

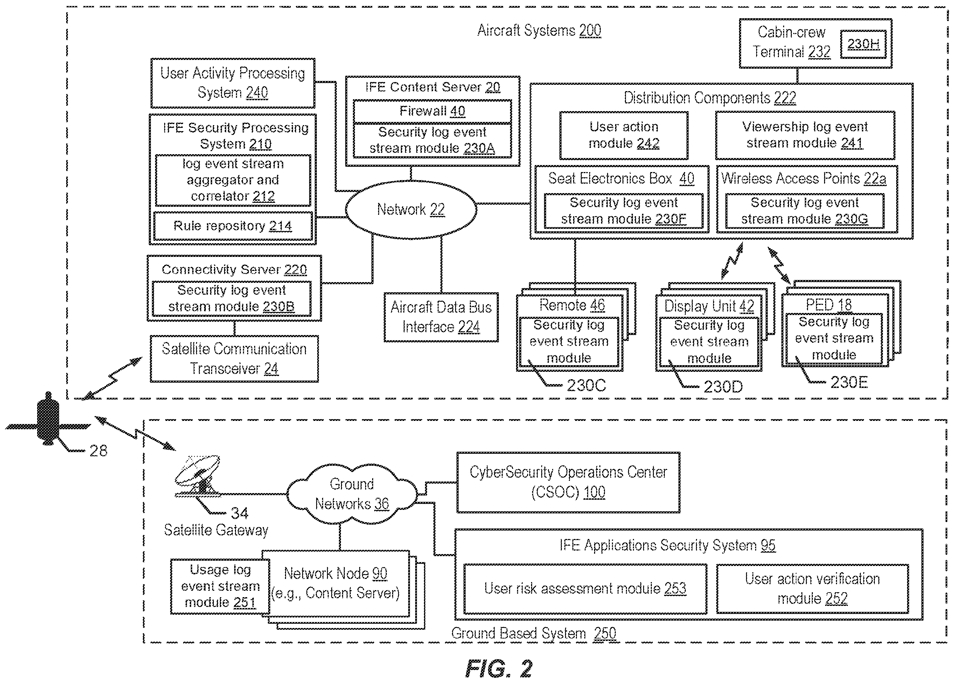

Figure 2 illustrates a further block diagram of the aircraft systems 200 and the ground-based cybersecurity operations center 250 of Figure 1 which are configured according to some embodiments of the present disclosure.

Referring to Figure 2, the aircraft system 200 includes example content delivery devices, such as display units (video display units) 42 and an IFE content server 20, a connectivity server 220, a satellite communication transceiver 24, an aircraft data bus interface 224, and data traffic distribution components 222. Passenger electronic devices ("PEDs") 18 may be passenger owned devices and/or owned by airlines and provided for temporary use by passengers during the duration of a flight. The distribution components 222 communicatively connect service delivery devices, such as the display units 42 and PEDs 18, to other components of the aircraft system 200 through wired communication connections provided by seat electronic boxes 40 (e.g., each mounted to a row of seats) and/or through wireless communication connections provided by wireless access points 22a which can be spaced apart along the aircraft cabin. Ground-based computer systems 250 which include various network nodes 90 (e.g., Internet website content servers, airline content servers, etc.) can communicate through ground-based networks 36 (e.g., Internet and/or private networks) the satellite gateway 34 and satellite 28 with the aircraft system 200. Passengers receive content from and may be enabled to communicate with various of the network nodes 90 through the display units 42 and/or the PEDs 18 to browse websites, stream movies, play games, access files, and perform other operations provided by the various network nodes 90.

Example content that can be streamed from the IFE content server 20 can include, but is not limited to, movies, TV shows, audio programs, application programs (e.g. games, news, etc.), informational videos and/or multimedia/textual descriptions (e.g., news, advertisements, and information related to inflight services, destination cites, destination related services, and products). The wireless access points 22a may be WIFI access points (e.g. IEEE 802.11, etc.), Bluetooth transceivers, cellular-based access points (e.g. a pico cell radio base station), etc.

The display units 42, the PEDs 18, and/or the remote controllers (passenger control units) 46 can be configured to request and receive content from the IFE content server 20 through wired and/or wireless network connections through the network 22 and/or the distribution components 222. Any number of display units 42, PEDs 18, and remote controllers (passenger control units) 46 may be used with embodiments herein.

In accordance with various embodiments disclosed herein, the aircraft systems 200 include an IFE security processing system 210 having at least one processor and at least one memory storing instructions executable by the at least one processor to perform operations including to receive log event streams from security log event stream modules integrated in various components of the aircraft system 200 and/or connected to the aircraft system 200. In the illustrated example of Figure 2, a security log event stream generator 230A generates a log event stream based on log events triggered by a firewall 40 connected to the IFE content server 20, and communicates the log event stream to the IFE security processing system 210. Another security log event stream generator 230B generates a log event stream based on log events triggered by a connectivity server 220, which controls communications between components of the aircraft system 200 communicating through the network 22 and the satellite communication transceiver 24, and communicates the log event stream to the IFE security processing system 210. Other security log event stream generators 230C-230E each generate a log event stream based on log events triggered by the remote 46, the display unit 42, and the PED 18, respectively, and communicate the log event stream to the IFE security processing system 210. Other security log event stream generators 230F and 230G each generate a log event stream based on log events triggered by the seat electronics box 40 and the wireless access points 22a, respectively, and communicate the log event stream to the IFE security processing system 210. Another security log event stream generator 230H generates a log event stream based on log events observed or triggered by the cabin-crew terminal 232.

The IFE security processing system 212 operates to aggregate content of the log event streams based on a level of aggregation set by aggregation commands received from a ground-based cybersecurity operations center, to generate an aggregated log file. The aircraft-based IFE security processing system 210 may be configured with a default level of aggregation which can be overridden by received aggregation commands. The IFE security processing system 212 further operates to communicate the aggregated log file through a satellite communication pathway to the ground-based CSOC 100. The aggregation and correlation operations may be performed by a log event stream aggregator and correlator 212. The IFE security processing system 212 may also include a rules repository 214 which is explained further below.

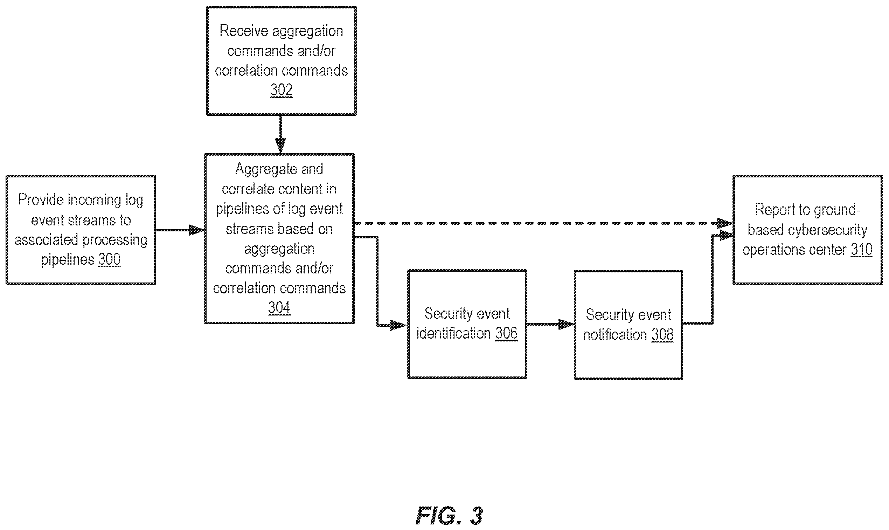

Figure 3 illustrates a block diagram of processing operations performed by the aircraft-based IFE security processing system 210 on incoming log event streams to report to the ground-based CSOC 100 of Figures 1 and 2 in accordance with some embodiments of the present disclosure.

Referring to Figure 3, incoming log event streams are provided 300 to associated processing pipelines for separate aggregation, separate correlation, and/or possible cross-correlation between pipelines. The incoming log event streams may be stored in data structures in memory with logical associations to the respective logical pipelines for retrieval and processing by one or more processors of the IFE security processing system 210. Aggregation commands and/or correlation commands are received 302 from the CSOC 100. Aggregation and correlation of content in the pipelines of log event streams is performed 304 based on the received aggregation commands and/or correlation commands, which can generate updated aggregated log files that are reported 310 periodically and/or upon request to the CSOC 100. Alternatively or additionally, operations may process the aggregated and/or correlated log file to identify a security event satisfying at least one defined security rule, e.g., in the rules repository 214, and responsively trigger generation of a security event notification 308 which is reported 310 to the CSOC 100. These and other operations are explained in further detail below in accordance with various embodiments of the present disclosure.

Some operations of the IFE security processing system 210 may be based on functionality of Graylog management software, by Graylog Corp, to perform aggregation and/or correlation of content of the log event streams to generate aggregated log file. Graylog management software may additionally or alternatively be used to identify occurrence of a security event based on content of the area log file. Graylog management software is an open-source software capable of performing correlation operations on log event streams and enabling definition of security alert triggering rules. In accordance with various embodiments herein, the aggregation and/or correlation of content of the log event streams is performed responsive to aggregation commands received from the ground-based CSOC 100, which are generated based on analysis of one or more aggregation log files earlier received from the same IFE security processing system and/or a set of IFE security processing systems distributed across a set of aircraft.

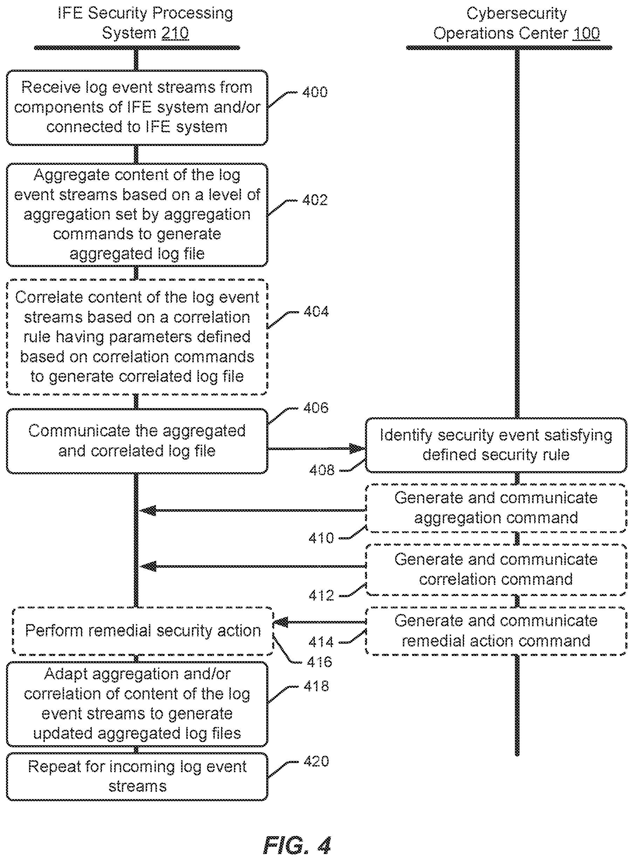

Figure 4 illustrates a data flow diagram and operations by the aircraft-based IFE security processing system 210 and the ground-based CSOC 100 in accordance with some embodiments of the present disclosure.

Referring to Figure 4, the IFE security processing system 210 receives 400 log event streams from components of the aircraft system 200, and aggregates 402 content of the log event streams based on a level of aggregation set by aggregation commands received from the ground-based CSOC 100, to generate an aggregated log file. The IFE security processing system 210 may also correlate 404 content of the log event streams based on a correlation rule having parameters defined based on correlation commands received from the ground-based CSOC 100. The operations then communicate 406 the aggregated and possibly also correlated log file to the ground-based CSOC 100.

The components from which the IFE security processing system 210 can receive log event streams can include, without limitation, a network intrusion detection system, a role-based access control system, a secure shell (SSH) protocol module, antivirus software, access point rouge detection logs, firewall, user authentication services, software integrity monitoring services, network intrusion detection services, etc. Various of these components may be hosted on any one or more of the aircraft systems 200 shown in Figure 2, including without limitation: a network interface security unit; an IFE content server; a connectivity server; an interactive cabin management terminal; a seat video display unit; a touch passenger media unit; a wireless access point; a seat electronics box; a PED; and other components described above for the aircraft systems 200 of Figure 2.

In some further embodiments, the operation to correlate 404 content of the log event streams based on the correlation rule having parameters defined based on the correlation commands received from the CSOC 100, includes to correlate content of individual ones of the log event streams over a time interval that is defined by the correlation commands received from the CSOC 100, to generate the aggregated log file with the correlated content. The operation to correlate content of individual ones of the log event streams over a time interval that is defined by the correlation commands, may include to receive first and second correlation commands. The first correlation command requests correlation of a first group of log event streams over a first time interval and the second correlation command requests correlation of content of a second group of log event streams, where the first time interval is different than the second time interval, and the first group of log event streams contains at least some different log event streams than the second group of log event streams. The operations correlate content of individual ones of the log event streams in the first group over the first time interval, and correlate content of individual ones of the log event streams in the second group over the second time interval.

In some further embodiments, the operation to correlate 404 content of the log event streams based on the correlation rule having parameters defined based on the correlation commands received from the CSOC 100, includes to select a group of the log event streams which are identified by the correlation commands received from the ground-based cybersecurity operations center. The operations then correlate between content of the selected group of the log event streams to generate a correlation content file characterizing similarities and/or differences between the content of the selected group of the log event streams which are indicative of a cybersecurity event occurring, and communicate the correlated content file through the satellite communication pathway to the ground-based cybersecurity operations center. For example, log event streams from the wireless access points 22a can be cross-correlated to identify a pattern of failed access attempts observed across different ones of the wireless access points 22a from requests from a same identified PED.

The ground-based CSOC 100 includes at least one processor and at least one memory storing instructions executable by the at least one processor to perform operations. The operation include to receive the aggregated log file through a satellite communication pathway from the IFE security processing system 210, and to process the aggregated log file to identify 408 a security event satisfying at least one defined security rule. The operations respond to identifying 408 the security event, by generating 410 an aggregation command which is communicated through the satellite communication pathway to the IFE security processing system 210 to control aggregation by the IFE security processing system 210 of content of log event streams from components of the aircraft system 200 to generate an updated aggregated log file.

In a further embodiment, the ground-based CSOC 100 operates to respond to identifying 408 the security event, by determining 412 a time interval over which the IFE security processing system 210 is to perform periodic aggregation of content of the log event streams to generate updated aggregated log files, and communicating 412 the determined time interval in a correlation command that controls correlation by the IFE security processing system 210 of content of individual ones of the log event streams.

In a further embodiment, the ground-based CSOC 100 operates to respond to identifying 408 the security event, by selecting 412 a group of the log event streams in which the IFE security processing system is to perform aggregation of content to generate the updated aggregated log file, and communicating 412 the selected group of the log event streams in a correlation command that controls correlation by the IFE security processing system 210 of content of selected group of the log event streams.

In a further embodiment, the ground-based CSOC 100 operates to respond to identifying 408 the security event, by generating 410 the aggregation command to request a defined level of aggregation of content of the log event streams by the IFE security processing system 210 processing content of a raw log file using an aggregation algorithm operationally controlled by the defined level of aggregation to generate the updated aggregated log file, and communicating the aggregation command through the satellite communication pathway to the IFE security processing system 210. Thus, for example, the CSOC 100 can respond to identifying a possible security event occurring in a particular component (e.g., connectivity server 220) of the aircraft systems 200, by sending a command to the IFE security processing system 210 instructing for a greater quantity of content (e.g., less aggregation of the content) in the log event stream from that particular component be included in the aggregated log file. The CSOC 100 may, for example, command the IFE security processing system 210 to begin storing non-aggregated raw content of the log event stream from the particular component into the area log file that is communicated to the CSOC 100, which can enable more detailed further analysis by the CSOC 100 to identify a possible root cause of the security event and determine an associated remedial action is to be performed by the IFE security processing system 210.

In a further embodiment, the ground-based CSOC 100 operates to respond to identifying 408 a first security event associated with a first group of log event streams that satisfies a first security rule, by generating 410 a first aggregation command requesting a first level of aggregation of content of a first group of log event streams by the IFE security processing system, and communicating the first aggregation command through the satellite communication pathway to the IFE security processing system 210. Following communication of the first aggregation command and responsive to identifying 408 a second security event associated with a second group of log event streams that satisfies a second security rule, the operations generate 410 a second aggregation command requesting a second level of aggregation of content of a second group of log event streams by the IFE security processing system 210, and communicate the second aggregation command through the satellite communication pathway to the IFE security processing system 210.

In a further embodiment, the ground-based CSOC 100 operates to respond to identifying 408 the security event, by generating 414 a remedial security action command that instructs the IFE security processing system 210 to perform at least one of any of the following, which the CSOC 100 selectively indicates based on the remedial action rule:
1) deny access to a wireless access point by a PED 18 identified by the remedial security action command;
2) generate a notification through an interactive cabin management terminal which characterizes a security remedial action to be performed by a crew member;
3) block external communication access to a hardware interface port number, of the IFE security processing system, identified by the remedial security action command;
4) determine a passenger seat identifier associated with a security event identified by the remedial security action command, and generate an electronic notification containing the passenger seat identifier;
5) block communications by a PED 18 identified by the remedial security action command;
6) block communications by a display unit 42 identified by the remedial security action command;
7) block communications by a touch passenger media unit (remote controller 46) identified by the remedial security action command;
8) block communications by the interactive cabin management terminal identified by the remedial security action command;
9) block messages containing a characteristic identified by the remedial security action command, from being communicated through a cabin network; and
10) communicate the remedial security action command through the satellite communication pathway to the IFE security processing system 210.

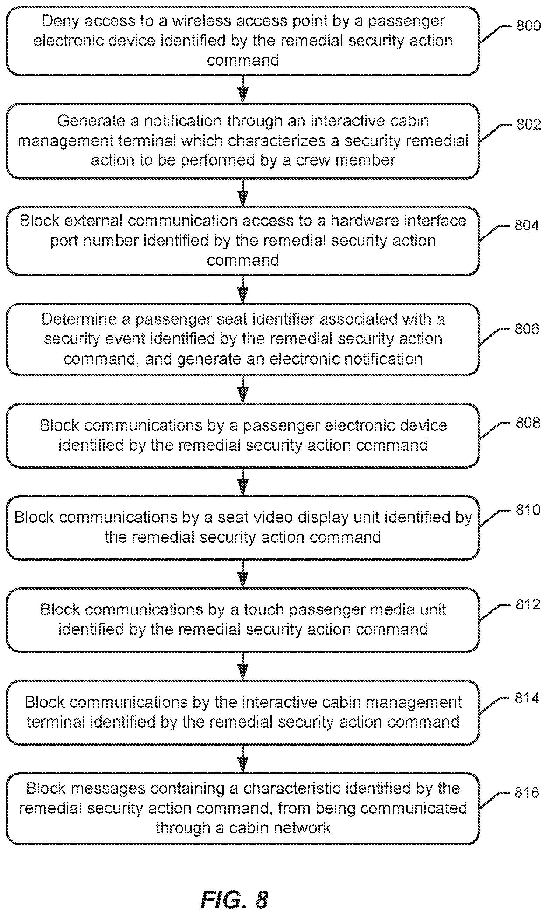

In a corresponding manner, the IFE security processing system 210 can receive 414 the remedial security action command from the ground-based cybersecurity operations center 100 through the satellite communication pathway, and perform 416 a remedial security action determined based on the remedial security action command. Figure 8 illustrates a flowchart of operations by the IFE security processing system 210 to perform a remedial security action. Referring to Figure 8, the remedial security action performed by the IFE security processing system 210 responsive to the remedial security action command, includes performing at least one of any of the following:
1) denying 800 access to a wireless access point by a PED 18 identified by the remedial security action command;
2) generating data to a notification through an interactive cabin management terminal which characterizes a security remedial action to be performed by a crew member;
3) blocking 804 external communication access to a hardware interface port number, of the IFE security processing system, identified by the remedial security action command;
4) determining 806 a passenger seat identifier associated with a security event identified by the remedial security action command, and generating an electronic notification containing the passenger seat identifier which can be communicated to the interactive cabin management terminal and/or another display device;
5) blocking 808 communications by a passenger electronic device identified by the remedial security action command;
6) blocking a 10 communications by a display unit 42 identified by the remedial security action command;
7) blocking a 12 communications by a touch passenger media unit identified by the remedial security action command;
8) blocking 814 communications by the interactive cabin management terminal identified by the remedial security action command; and
9) blocking 816 messages containing a characteristic identified by the remedial security action command, from being communicated through a cabin network.

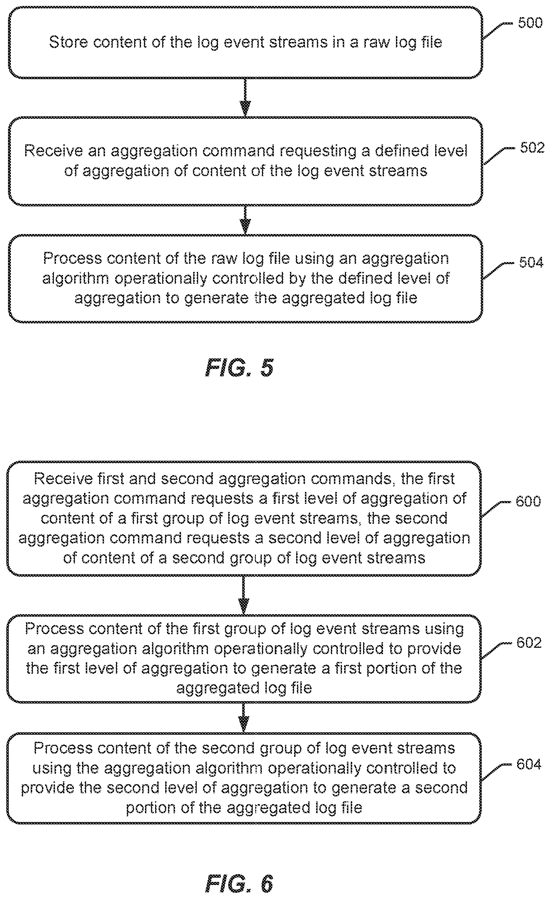

Some further embodiments are directed to the CSOC 100 controlling how the IFE security processing system 210 performs aggregation of content of a raw log file containing the log event streams to generate an aggregated log file. Figure 5 is a flowchart of corresponding operations that can be performed by the IFE security processing system 210.

Referring to Figure 5, the IFE security processing system 210 operates to store 500 content of the log event streams in a raw log file. The corresponding operation to aggregate content of the log event streams based on the level of aggregation set by aggregation commands received from the ground-based cybersecurity operations center, to generate an aggregated log file, includes to: receive 502 an aggregation command requesting a defined level of aggregation of content of the log event streams; and
process 504 content of the raw log file using an aggregation algorithm operationally controlled by the defined level of aggregation to generate the aggregated log file. The level of aggregation may, for example, control how much content is aggregated together (e.g., combined in a statistical matter and what parameters are used by the statistical algorithms for the combining) to generate content for the aggregate log file. The IFE security processing system 210 may be configured with a default level of aggregation which can be overridden by received aggregation commands.

In a further embodiment, the aggregation command requests no level of aggregation of content of the log event streams for a defined length segment of the raw log file starting from a defined location in the raw log file. The operation to process 504 content of the raw log file using the aggregation algorithm operationally controlled by the defined level of aggregation to generate the aggregated log file, includes to extract the defined length segment of the raw log file starting from the defined location in the raw log file, and store the extracted defined length segment of the raw log file in the aggregated log file.

In further embodiment, the IFE security processing system 210 further operates to: identify one of the log event streams based on source information contained in the aggregation command; and process content of the raw log file that is only from the identified one of the log event streams, using the aggregation algorithm operationally controlled by the defined

Some further embodiments are directed to the CSOC 100 controlling the level of aggregation used by the IFE security processing system to tend to aggregate content of the log event streams to generate an aggregated log file. Figure 6 is a flowchart of corresponding operations performed by the IFE security processing system 210.

Referring to Figure 6, the IFE security processing system 210 operates to aggregate content of the log event streams based on the level of aggregation set by aggregation commands received from the ground-based cybersecurity operations center, to generate an aggregated log file, includes to receive 600 first and second aggregation commands from the CSOC 100. The first aggregation command requests a first level of aggregation of content of a first group of log event streams. The second aggregation command requests a second level of aggregation of content of a second group of log event streams, where the first level of aggregation is different than the second level of aggregation. The operations process 602 content of the first group of log event streams using an aggregation algorithm operationally controlled to provide the first level of aggregation to generate a first portion of the aggregated log file. The operations process 604 content of the second group of log event streams using the aggregation algorithm operationally controlled to provide the second level of aggregation to generate a second portion of the aggregated log file. In this example, the reference to "first level of aggregation" may correspond to a level of aggregation that has been modified from a default level of aggregation for which the IFE security processing system 210 is configured to use by default.

In a further embodiment, the first level of aggregation operationally controls the aggregation algorithm to aggregate content over a first time interval of the first group of log event streams to provide the first level of aggregation when generating the first portion of the aggregated log file. Similarly, the second level of aggregation operationally controls the aggregation algorithm to process content over a second time interval of the second group of log event streams to provide the second level of aggregation when generating the second portion of the aggregated log file, where the first time interval has a shorter time duration than the second time interval.

In a further embodiment, the IFE security processing system 210 further operates to repetitively generate updated aggregated log files at a periodic rate that is controlled based on a rate command received from the ground-based cybersecurity operations center.

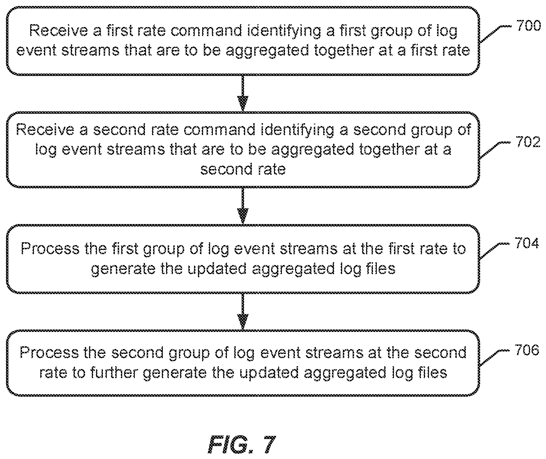

Some other embodiments are directed to the CSOC 100 controlling the rate at which the IFE security processing system 210 aggregates incoming log event streams to generate updated aggregation log files. Figure 7 illustrates a flowchart of corresponding operations by the IFE security processing system 210.

Referring to Figure 7, the IFE security processing system 210 operates to receive 700 a first rate command identifying a first group of log event streams that are to be aggregated together at a first rate. The operations receive 702 a second rate command identifying a second group of log event streams that are to be aggregated together at a second rate. The operations process 704 the first group of log event streams at the first rate to generate the updated aggregated log files. The operations process 706 the second group of log event streams at the second rate to further generate the updated aggregated log files. In this example, the reference to "first rate command" may correspond to a rate that has been modified from a default rate for which the IFE security processing system 210 is configured to use by default.

### User Behavior Analytics for Risk Assessment and Remediation:

Other related embodiments of the present disclosure are directed to performing risk assessment based on user behavior analytics and triggering remedial actions when one or more action rules are satisfied. Some operations identify when security events are predicted to have a threshold risk of occurring in the near-future or when they may already be occurring. The operations may determine a risk score based on assessing user interactions with components which can be on-board the aircraft and/or ground-based. As will be explained in further detail below, example user interactions which can be assessed to generate a risk score can include, but are not limited to: failed user login attempts to one or more account(s); declined user credit card transaction(s); declined user debit card transaction(s); user attempt(s) to access Internet content using an unauthorized type of Internet browser (e.g., identity masking browser); user attempt(s) to access prohibited (e.g., blacklisted) Internet content and/or domain source; user attempt(s) to access prohibited application; unauthorized access attempt(s) to a crew terminal; pattern of user interactions with a seat display device and/or PED that is atypical of defined or learned behavior. For example, some user interactions may be indicative of malicious intent, agitation, nervousness, anger, confusion, medical condition, etc. Example prohibited applications can include an anonymous Internet browser (e.g., Tor browser), an adult rated video game hosted on a PED but attempted to be streamed through a seat video display, etc.

IFE and other aircraft components may be configured to log information which supports identification and prediction of a security risk based on processing the logged information through a ground-based security system which uses risk assessment rules and/or historical event models, e.g., machine learning models, to assess risk. The ground-based security system may be configured to generate alerts to the CSOC 100 and/or to defined external entities, e.g., airport security personal, indicating current or potential risks that may require remedial actions.

The term "user" is used herein is a general sense to refer to a passenger, crew, maintenance person, security person, and/or anyone else who is onboard the aircraft or communicatively connected to electronic components of the IFE system or other aircraft system(s).

Referring again to Figure 1, the aircraft systems 200 can further include an aircraft-based user activity processing system 240 which communicates through a satellite 28 and satellite gateway 34 with a ground-based IFE applications security system 95 and various other ground-based network nodes, such as the CSOC 100, the content server 90, etc. in accordance with some embodiments of the present disclosure.

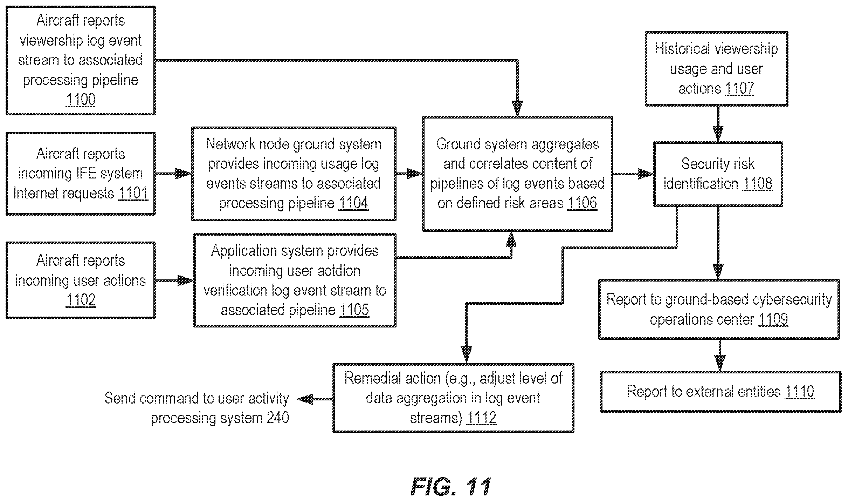

In the more detailed example of Figure 2, the user activity processing system 240 can operate to receive log event streams from a viewership log event stream module 241 and a user action module 242 integrated in various components of the aircraft systems 200 and/or communicatively connected to the aircraft systems 200. The user activity processing system 240 may aggregate content of the log event streams over time and from multiple users for reporting communications to the IFE applications security system 95. The level of aggregation that is used when aggregating content of the log event streams may be dynamically controlled by the CSOC 100, by the IFE security processing system 210, and/or by the IFE applications security system 95 pursuant to one or more of the operational embodiments described with regard to Figures 1-10 and below with regard to Figure 11.

Although the user activity processing system 240 is illustrated as being separate from the IFE security processing system 210 in Figures 1 and 2, it is to be understood that the operational functionality described herein as being performed by the user activity processing system 240 may be performed as an application layer executed by the IFE security processing system 210 or vice versa. Accordingly, the terms user activity processing system 240 and IFE security processing system 210 do not require use of separate physical hardware processing architecture, but can include covering different functional operations executed as hosted applications on a same hardware processing architecture.

Similarly, although the IFE applications security system 95 is illustrated as being separate from the CSOC 100 in Figures 1 and 2, it is to be understood that the operational functionality described herein as being performed by the IFE applications security system 95 may be performed as an application layer executed by the CSOC 100 or vice versa. Accordingly, the terms IFE applications security system 95 and CSOC 100 do not require use of separate physical hardware processing architecture, but can include covering different functional operations executed as hosted applications on a same hardware resource architecture.

The viewership log stream module 241 can operate to generate a log event stream that indicates what content is selected by users for consumption e.g., viewing, listening, and/or interacting, through components of the IFE system, such as seat video display units 42, PEDs 18, etc. The log event stream can include user activity data which may indicate IFE content items which a user has selected on the device, such as any interactive "clickable" content displayed and/or any user activated (e.g., selected) item available through the device. The user activity data is also referred to as viewership information and is captured by the viewership log event stream module 241. The content may include movies, television shows, radio programming, games, text messaging, voice calling, multimedia conferencing, seat display unit and/or PED system settings, etc. The log event stream may indicate what Internet content (e.g., URL addresses) is requested by a user. The log event stream may indicate user interactions with a seat display device and/or PED that are atypical of defined or learned behavior, such as when: a user is dragging a finger or other object along the touch sensitive display screen at an excessive rate of speed, for an excessive time duration, etc.; applying an excessive level of force against the screen (e.g., sensed through a touch force sensitive screen interface); sequentially selecting more than a threshold number of user-selectable indicia displayed on the display screen in a threshold time duration; etc.

The user action module 242 can operate to generate a log event stream that indicates what transactional events have been triggered (initiated) by users through components of the IFE system, such as seat video display units 42, PEDs 18, etc. The transactional events may correspond to login requests to one or more accounts; credit card transaction requests; debit card transaction requests; etc.

A usage log event stream module module 251 may be ground-based or may be partially or entirely in an aircraft-based component of the aircraft systems 200. The usage log event stream module module 251 may generate a log event stream that is similar to or used in place of operations of the log event streams described with regard to modules 242 and/or 241. The usage log event stream module module 251 may aggregate content of the log event stream over time, across users on an aircraft, and/or across users on a plurality of aircraft for reporting to the IFE applications security system 95.

The IFE applications security system 95 can include a user action verification module 252 and a user risk assessment module 253.

The aircraft-based user activity processing system 240 can operate to communicate real-time user requests to the ground-based IFE Applications Security System 95, such as to the user action verification module 252, which processes the request and responds back to the system 240 regarding which requests are allowed and/or disallowed. These responses can be used by the aircraft-based user activity processing system 240 to allow or deny the users action.

The user action verification module 252 can operate to identify and report any disallowed user requests. One example of disallowed user requests is when a user's transaction request is declined due to use of a fraudulent credit card, e.g., one that is reported stolen, has incorrect account number, expiration date, and/or CCV. Another example disallowed user request is when a user initiates a purchase request for an item or service that is prohibited (restricted) by trade compliance, or the user is listed among a list of denied persons for the item or service. Still other example disallowed user requests can correspond to one or more of: failed user login attempts to one or more accounts; declined user debit card transaction; passenger attempts to access unauthorized content through an onboard component (e.g., seat display device and/or PED); user attempts to access Internet content using an on authorized type of Internet browser (e.g., identity masking browser); user attempts to access prohibited (e.g., blacklisted) Internet content; and unauthorized access attempts to a crew terminal.

The user risk assessment module 253 can be configured to generate a risk assessment, e.g., risk score, based on logged indications of a user's behavior. The user indicated user behavior can be compared relative to expected normal range of passenger activities. Behavior outside of this range can be interpreted as a current or potential threat or other user risk.

In some embodiments, the user risk assessment module 253 contains a machine learning model which is trained through supervised training to assess risk based on the log event streams reported by the aircraft-based user activity processing system 240, the usage log event stream module 251, and the user action verification module 252. At least one processor and the at least one memory part of the IFE applications security system 95 can perform operations to train a machine learning model of the at least one user behavior analytics model through supervised training to assess risk based on the log event streams reported by the user activity processing system 240 component related to the IFE security processing system 210.

The machine learning model can be trained based on feedback of content of log event streams that corresponded to confirmed risks created by users, such as fraudulent transactions performed by users, confirmed instances of user risky behavior, etc. For example, the machine learning model can be adapted to provide an acceptable risk notification, e.g., output a risk score within an acceptable range, when content of the reported log event streams corresponds to a passenger browsing acceptable Internet content, selecting advertisements for review, making acceptable purchase transactions, watching acceptable TV and movie content, viewing IFE applications such as the aircraft moving map, and other activities that have been trained to be considered a "typical" pattern of acceptable user activities. In sharp contrast, the machine learning model can be adapted to trigger an unacceptable risk notification, e.g., output a risk score outside an acceptable range, when content of the reported log event streams corresponds to a passenger attempting to browse an abnormal number of blacklisted materials, disguise Internet browsing activities using a Virtual Private Network (VPN) or anonymous Internet browser, such as the Tor browser, or execute an application which has been associated with risky behavior. In addition, an unacceptable risk notification can be triggered when the passenger tries to make a fraudulent purchase, a purchase for which they have been denied by trade compliance regulations, credit card transaction denial, etc., or when another action is attempted which has otherwise been denied based on the nature of the attempted action and/or the user's identity.

The user risk assessment module 253 can operate to generate predictive risk assessments and/or to identify the present occurrence of security risks based on content of the log event streams and user behavior analytics which are assess based on machine learning and/or rules that are defined at setup and adapted over time. The type of IFE usage information that is collected can be controlled based on authorization rules and/or operational settings. The user risk assessment module 253 may correlate behavioral indications provided by content of the log event streams across users within a same aircraft and across all users who are currently transported in other aircraft and/or who have previously been transported in that aircraft and/or in other aircraft along the same route, departing from the same airport, headed to the same destination airport, associated with the same flight time, etc.

For example, in one embodiment the ground-based IFE applications security system 95, via the user action verification module 252, can collect user transaction verification data that can identify the user and a result of a user-initiated transaction using a seat display unit 42, a PED 18, or other component (e.g., NFC credit card chip reader) of the aircraft system 200. The user transaction verification data can be recorded in a user transaction verification log event stream. Example user transactions which are verified can have results and associated information collected, include credit card transactions, debit account transactions, account login attempts, user authentication attempts, etc. These user transactions can include or result in obtaining user identifying information which can be included in the user transaction verification data for assessment by the IFE applications security system 95, via the user risk assessment module 253. Example user identifying information can include one or more of username, home address, email address, phone number, credit card information, and/or other data that is associated with an individual user and which can be included with a user transaction or can be obtained as part of processing the user transaction. The identifying information may also relate to the aircraft transporting the user, such as one or more of airline name, aircraft identifier (e.g., tail number), departure airport, destination airport, etc.

The ground-based IFE applications security system 95 can collect user activity data tracked by the viewership log event stream module 241, the user action module 242, the usage log event stream module 251, etc., which can be reported through log event streams and which may or may not include user identifying information.

The user risk assessment module 253 can be configured to store information contained in all log streams into a historical data repository for use in the assessment of risks. As explained above, the module 253 may assess risk of targeted attacks, such as denial of service attacks targeting onboard aircraft components and/or ground based systems, financial fraud, and indications of risky user behavior associated with anger, frustration, etc. In another embodiment the user risk assessment module 253 applies analytic models, e.g., machine learning models, to detect anomalies in the data which indicate potential threats to the aircraft systems 200, ground based systems (e.g., computer servers), other passengers, and/or the airline.

In a further embodiment the user risk assessment module 253 generates a risk score indicating the risk of a threat, which can be reported the ground based CSOC 100 for further assessment of the risk score and possible initiation of a remedial action. The risk score may be generated according to a defined range of values or may be a Boolean flag indicating positive or negative indication of a risk. The risk score may be reported with information identifying the device through which the user is interfacing (e.g., MAC address of display unit 42 and/or PED), information identifying the passenger (when passenger information has been obtained, such as through a financial transaction request), the aircraft, flight route, airline, etc. The type of information that is reported with the risk score can be dynamically adapted by the IFE applications security system 95 and/or the CSOC 100 based on one or more of the embodiments described above with regard to Figures 1-10, e.g., so that cost-effective and timely utilization of the satellite communication pathway is performed.

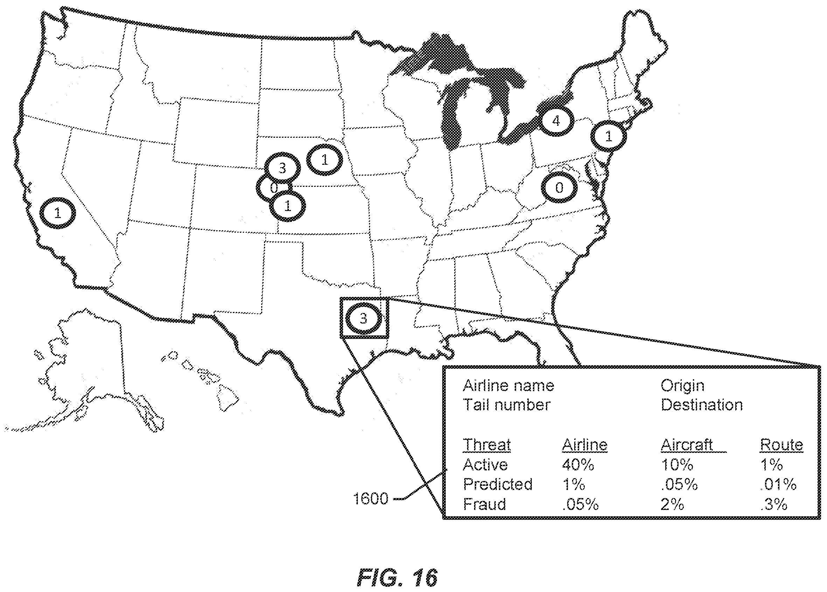

Figure 16 illustrates a CSOC computer generated display illustrating a threat risk display based on user behavior analytics in accordance with some embodiments of the present disclosure. In the illustrated example, 9 flights are displayed according to present geographical location and with a numerical indication of a risk score generated for the respective flights. In example, a risk score of "4" indicates a high risk of near-term or ongoing security threat, a risk score of "3" indicates a moderate risk of near-term or ongoing security threat, a risk score of "2" indicates a low risk of near-term or ongoing security threat, a risk score of "1" indicates no risk of near-term or ongoing security threat, and a risk score of "0" indicates an inconclusive risk of near-term or ongoing security threat based on, e.g., lack of sufficient reported log stream content data. Figure 16 also indicates that one aircraft has been selected by an operator for further analysis, indicated as enclosed by the displayed square box, and which results in display of details of the threat score for that aircraft. The active threat score for that airline is also shown with 40% representative of the 4 of 10 aircraft (10th aircraft not illustrated) being shown as moderate or high risk. The aircraft's active risk score of 10% and 2.00% for fraud exceeds both what is predicted for the aircraft as well as for the route and airline as a whole. In the detailed data the risk score is associated with an indication of fraudulent credit card usage due to an abnormal number of purchases having been denied because of invalid credit cards being used. Different colors and/or other indicia may be used to visually indicate which, if any aircraft are possibly experiencing a security event and/or to visually indicate a level of the security event (e.g., risk score).

Figure 11 illustrates a block diagram of processing operations performed by the IFE applications security system 95 on incoming log event streams and user actions originating from the aircraft systems, and which results in reporting to the CSOC 100 of Figures 1 and 2 in accordance with some embodiments of the present disclosure.

Referring to Figure 11, the IFE applications security system 95 processes three incoming log event streams: aircraft reported viewership log event streams 1100; aircraft reported IFE system Internet requests 1101; and aircraft reported user actions 1102. These log streams can be received from one or more aircraft and one or more airlines, and the content thereof can be aggregated, correlated, and persistently archived. The archived data is assessed for risk, which may generate a risk score indicating the likelihood of imminent or ongoing threat. Advantages can be obtained by aggregating and correlating the log event streams from one aircraft with those from other aircraft to identify when user behavior is inconsistent with past or present behavior observed across a plurality of aircraft. Correlation of the data may be performed based on one or more of being associated with the same route, departing from the same airport, headed to the same destination airport, associated with the same flight time, etc.

In the example of Figure 11, the incoming IFE system Internet requests 1101 are provided 1104 to the network node 90, which reports by the usage log event stream module 251 when an Internet request or a pattern of Internet requests by a passenger or passengers on an aircraft is blocked (denied). The incoming user actions streams 1102 are provided 1105 to the user action verification module 252, which reports the results of verification (e.g., whether credit card transaction requests are denied, debit card transaction requests are denied, etc.) to the user risk assessment module 253. Content of the incoming viewership log event streams is also provided to the risk assessment module 253. Reports by the usage log event stream module 251 and the user action verification module 252 along with the content of the viewership log event streams are provided to the user risk assessment module 253 for aggregation and correlation 1106 across users on the aircraft and possible further aggregation and correlation across other aircraft. The user risk assessment module 253 can generate a risk score based thereon. The risk score may be based on comparing the aggregated and correlated data to historical usage and user actions 1107. For example, as described above, the user risk assessment module 253 may process the aggregated and correlated data through a machine learning model that has been trained based on historical viewership usage, user actions, and other historical data 1107 to generate risk score(s) which are indicative of the likelihood of a near-term or ongoing threat.

The user risk assessment module 253 may respond to the generated risk score by taking various actions. In one embodiment, the user risk assessment module 253 reports 1109 a risk notification to the CSOC 100 responsive to the risk score satisfying a reporting rule. The CSOC 100 can further analyze content of information that has been reported with the risk score along with assessment of other notifications that have been received, and can report 1110 a threat advisement to one or more external entities, e.g., the airline, airport security personnel, etc., when an associated reporting rule is satisfied. In another embodiment, the user risk assessment module 253 can perform a remedial action which may include sending a notification to crew of the at-risk aircraft that includes information informing of the risk and possibly also identifying the user, the user's device, etc. In another embodiment, the remedial action triggered by the user risk assessment module 253 can include adjusting a level of data aggregation performed by the user activity processing system 240, e.g., by sending a command thereto, and/or a level of data reported in the log event streams by the user action module 242 and/or the viewership log event stream module 241.

Some operations of the IFE Applications Security System 95 (e.g., via the user risk assessment module 253) may identify security risks 1108 by: comparing airline level data to the same historical data of that airline; comparing aircraft level data to the same historical data of that aircraft; comparing route level data to the same historical data of that route; comparing data across airlines or across routes flown across airlines; comparing data originating from a user device used across aircraft of one or many aircraft and/or airlines or routes; and/or comparing user identifiable information collected from user actions on one and/or across many airlines or routes.

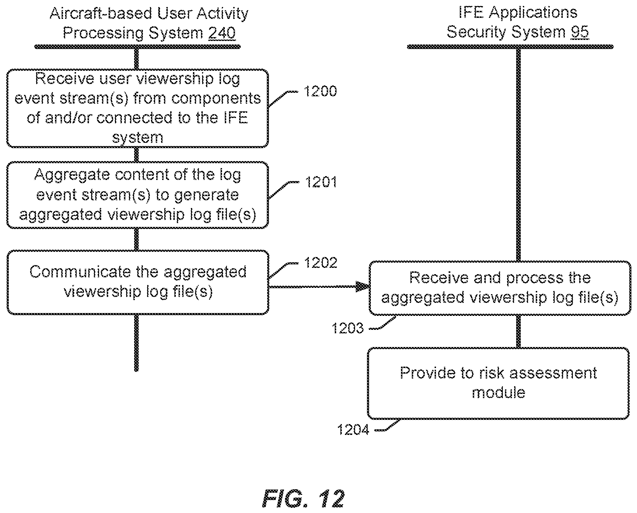

Figure 12 illustrates a block diagram of operations performed by the aircraft-based user activity processing system 240 on incoming log event streams to be processed by the ground-based IFE application security system 95 and to report to the ground-based CSOC 100 of Figures 1 and 2 in accordance with some embodiments of the present disclosure.

Referring to Figure 12, the user activity processing system 240 receives 1200 viewership log event streams from components of the aircraft system 200, and aggregates 1201 the content from the log event streams produced from all crew and passenger's use of the system components to generate aggregated viewership log files. The operations communicate 1202 the aggregated viewership log files to the ground-based IFE Applications Security System 95 which receives and processes the aggregated viewership log files. The user action verification module 252 and/or the usage log event stream module 251 can operate to indicate acceptability of whether viewership requests are denied (blocked), and the log file and associated acceptability are provided 1204 to the risk assessment module 253. The aggregated viewership log event streams may be communicated to the ground-based IFE applications security system based on commands received from the ground-based cybersecurity operations center indicating frequency and priority at which the aggregated viewership logs are to be communicated.

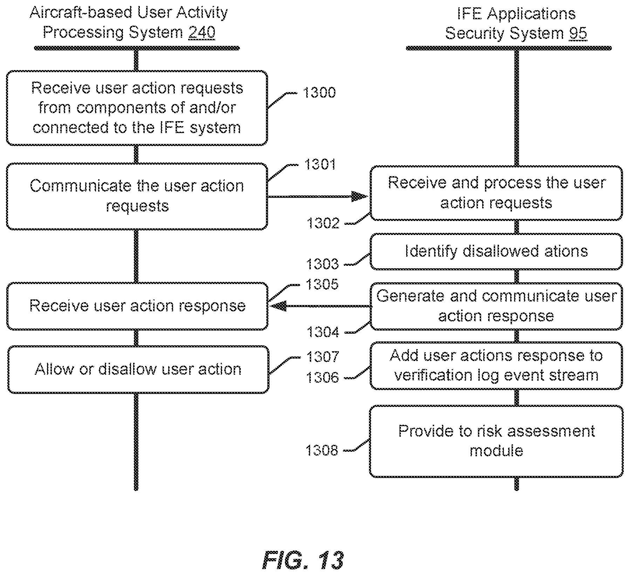

Figure 13 illustrates a block diagram of operations performed by the aircraft-based user activity processing system 240 on incoming user action requests to be processed by the ground-based IFE Application Security System 95 as an input to report to the ground-based CSOC 100 of Figures 1 and 2 in accordance with some embodiments of the present disclosure.

Referring to Figure 13, the user activity processing system 240 receives 1300 user action requests from components of the aircraft system 200, e.g., all crew and passenger's use of the components. The operations communicate 1301 the individual user action requests to the ground-based IFE Applications Security System 95 which receives and processes the user actions requests, e.g., via the user action verification module 252. The operations of the user action verification module 252 identify 1303 any disallowed requests. As explained above, a user action request can be denied when it involves use of an identified fraudulent credit card, or attempts to purchase an item or service restricted by trade compliance or is by a person who is listed among a list of prohibited persons for such item or service. Operations can communicate 1304 a user action response back to the user activity processing system 240, where it is received 1305 and triggers operations 1307 that responsively allow or disallow that action. Further operations may add 1306 the response to the verification log event stream. Operations provide 1308 the verification log event stream to the user risk assessment module 253 for further risk assessment and risk scoring.

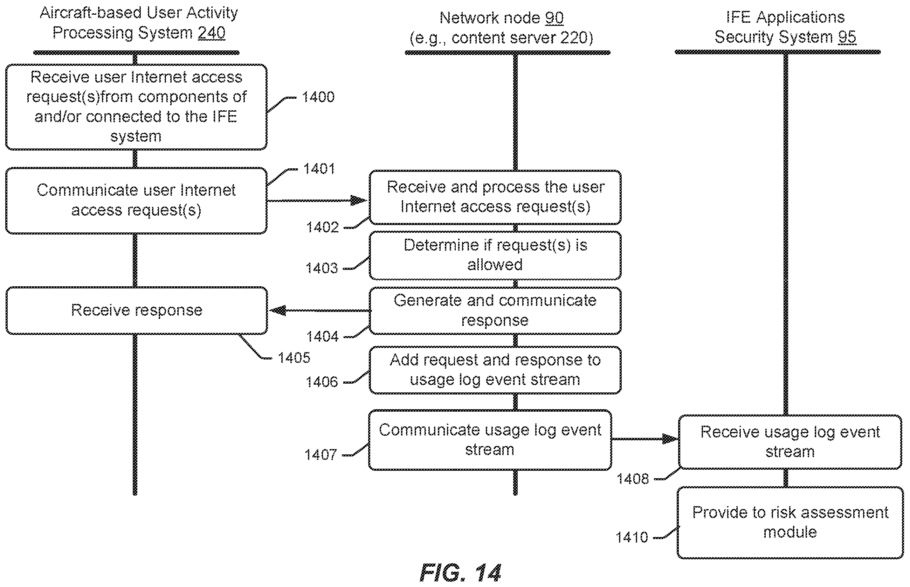

Figure 14 illustrates a block diagram of operations performed by the aircraft-based user activity processing system 240 on incoming user Internet access requests which are to be processed by the ground-based IFE application security system 95 as an input to report to the ground-based CSOC 100 of Figures 1 and 2 in accordance with some embodiments of the present disclosure

Referring to Figure 14, the user activity processing system 240 receives 1400 Internet requests from components of the aircraft system 200 initiated by crew and passenger's use of the components. The operations may communicate 1401 the individual Internet requests to the ground-based network node 90 (e.g., content server). Internet requests are received 1402 by the content server and which are processed 1403 by the usage log event stream module 251 determine whether the Internet request is allowed or is to be denied (blocked).

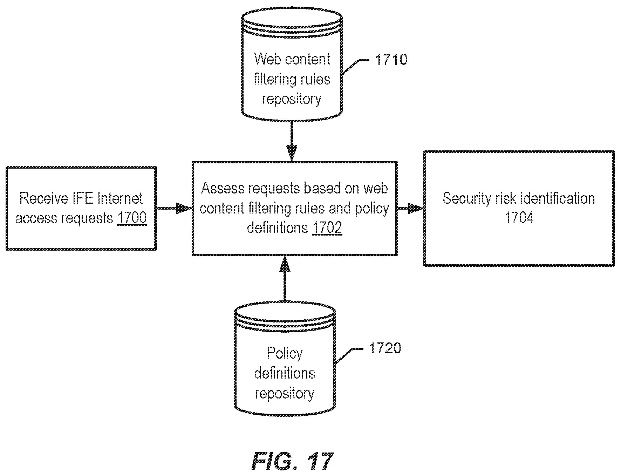

Figure 17 illustrates a block diagram of operations by the usage log event stream module 251 for assessment and security risk identification based on processing IFE internet access requests through web content filtering and policy definitions in accordance with some embodiments of the present disclosure. Referring to Figure 17, IFE Internet access requests are received 1700 and assessed 1702 based on web content filtering rules provided by a web content filtering rules repository 1710 and based on policy definitions provided by a policy definitions repository 1720. In addition to determining 1403 (Figure 14) whether the Internet request is allowed, the results of the assessment can be further processed to identify 1704 a security risk, and where the processing may be performed by or in conjunction with the risk assessment module 253.

In some embodiments the operations to assess 1702 Internet requests can include comparison to blacklisted Internet sites (blacklisted URLs) and/or whitelisted Internet sites. In some embodiments, the Internet requests may be selectively allowed or denied based on identifying whether they attempt to access Internet information containing prohibited words, graphical objects, or other content, and/or which will return prohibited executable scripts. In some additional or alternative embodiments, the Internet requests may be selectively allowed or denied based on identifying whether they would not satisfy one or more rules for: maximum communication data rate allowed per user; maximum aircraft to ground communication data rate; attempt a bulk transfer (e.g., file transfer protocol); involve email; involve gaming; exceed a maximum file size for storage or retrieval; involve peer-to-peer communication; request excessive quality of service provision; involve social networking; involve secure tunneling; involve web browsing; etc.

With further reference to Figure 14, the operations generate and communicate a response 1404, indicating whether the Internet request is allowed, to the user activity processing system 240, which receives and selectively allows 1405 the Internet request based on the response. The usage log event stream module 251 can add 1406 the Internet request and response to the usage log event stream that is communicated 1407 to the applications security system 95 for receipt 1408 and providing 1410 to the risk assessment module 253 for risk assessment.

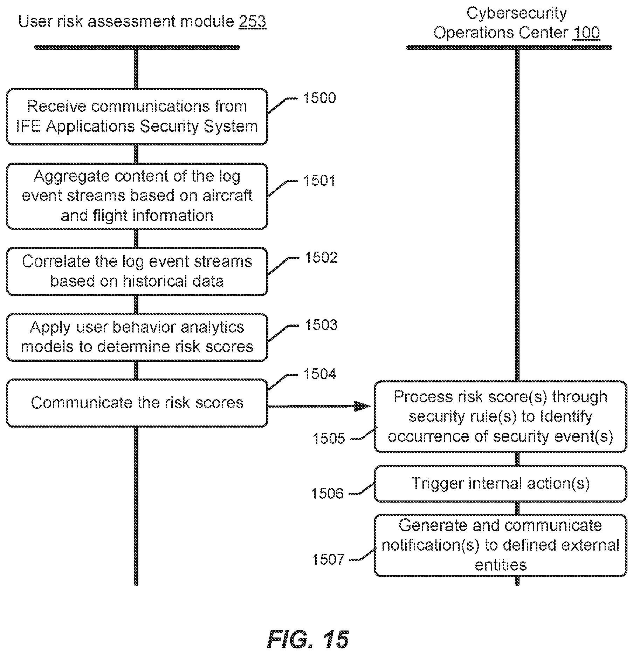

Figure 15 illustrates a block diagram of processing operations performed by the risk assessment module 253 to report to the CSOC 100 of Figures 1 and 2 in accordance with some embodiments of the present disclosure.

Referring to Figure 15, the risk assessment module 253 receives 1500 three separate log event streams originating from user actions through the aircraft systems 200 components in accordance with some embodiments of the present disclosure. Operations aggregate 1501 content of these event streams and correlate 1502 the content based on, e.g., airline, aircraft and route. Output of the aggregation and correlation may be saved as updates to a historical record 1107 of events. User behavior analytics models are applied 1503 to identify anomalies in the data and predict and/or identify security risks. Operations communicate 1504 the security risk assessment, e.g., in the form of risk scores, to the CSOC 100. Operations of the CSOC 100 process the risk score(s) through security rule(s) to identify 1505 occurrence of an imminent or ongoing security event as it applies to an airline, aircraft and/or route. Further operations trigger 1506 internal actions, such as notifications within the CSOC 100 for computer processes and/or personnel to evaluate the event(s) and determine if affected external entities need to be notified, e.g., is a notification rule satisfied. When a notification rule is satisfied, the CSOC 1000 generates and communicates 1507 a notification or advisement to one or more external entities which may have registered to receive these communications.

### Further Definitions and Embodiments:

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belongs. It will be further understood that terms, such as those defined in commonly used dictionaries, should be interpreted as having a meaning that is consistent with their meaning in the context of this specification and the relevant art and will not be interpreted in an idealized or overly formal sense expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, microcode, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without departing from the scope of the appended claims. All such variations and modifications are intended to be included herein within the scope of present claims. Accordingly, the above disclosed subject matter is to be considered illustrative, and not restrictive, and the appended examples of embodiments are intended to cover all such modifications, enhancements, and other embodiments, which fall within the scope of present claims. Thus, to the maximum extent allowed by law, the scope of present inventive concepts are to be determined by the broadest permissible interpretation of the present disclosure including the following examples of embodiments and shall not be restricted or limited by the foregoing detailed description.

## Claims

1. An inflight entertainment, IFE, security processing system, comprising:
at least one processor;
at least one memory storing instructions executable by the at least one processor to perform operations comprising to:
receive log event streams from components of an IFE system and/or connected to the IFE system;
aggregate content of the log event streams based on a level of aggregation set by aggregation commands received from a ground-based cybersecurity operations center, to generate an aggregated log file;
communicate the aggregated log file through a satellite communication pathway to the ground-based cybersecurity operations center; and
store content of the log event streams in a raw log file,
wherein the operation to aggregate content of the log event streams based on the level of aggregation set by aggregation commands received from the ground-based cybersecurity operations center, to generate an aggregated log file, comprises to:
receive an aggregation command requesting a defined level of aggregation of content of the log event streams; and
process content of the raw log file using an aggregation algorithm operationally controlled by the defined level of aggregation to generate the aggregated log file.

2. The IFE security processing system of Claim 1, wherein the operations further comprise to:
correlate content of the log event streams based on a correlation rule having parameters defined based on correlation commands received from the ground-based cybersecurity operations center.

3. The IFE security processing system of Claim 2, wherein the operation to correlate content of the log event streams based on the correlation rule having parameters defined based on correlation commands received from the ground-based cybersecurity operations center, comprises to:
correlate content of individual ones of the log event streams over a time interval that is defined by the correlation commands received from the ground-based cybersecurity operations center, to generate the aggregated log file with the correlated content.

4. The IFE security processing system of Claim 3, wherein the operation to correlate content of individual ones of the log event streams over a time interval that is defined by the correlation commands received from the ground-based cybersecurity operations center, to generate the aggregated log file with the correlated content, comprises to:
receive first and second correlation commands, wherein the first correlation command requests correlation of a first group of log event streams over a first time interval and the second correlation command requests correlation of content of a second group of log event streams, wherein the first time interval is different than the second time interval, wherein the first group of log event streams contains at least some different log event streams than the second group of log event streams;
correlate content of individual ones of the log event streams in the first group over the first time interval; and
correlate content of individual ones of the log event streams in the second group over the second time interval.

5. The IFE security processing system of Claim 2, wherein the operation to correlate content of the log event streams based on the correlation rule having parameters defined based on correlation commands received from the ground-based cybersecurity operations center, comprises to:
select a group of the log event streams which are identified by the correlation commands received from the ground-based cybersecurity operations center;
correlate between content of the selected group of the log event streams to generate a correlation content file characterizing similarities and/or differences between the content of the selected group of the log event streams which are indicative of a cybersecurity event occurring; and
communicate the correlated content file through the satellite communication pathway to the ground-based cybersecurity operations center.

6. The IFE security processing system of Claim 1, wherein the components connected to the IFE system include at least one of:
a network interface security unit;
an interactive cabin management terminal;
an aircraft data bus;
a seat video display unit; and
a touch passenger media unit.

7. The IFE security processing system of Claim 1, wherein the streams are received from at least one of:
a firewall;
a network intrusion detection system;
a role-based access control;
a secure shell protocol; and
an antivirus software;

8. The IFE security processing system of Claim 1, wherein:
the aggregation command requests no level of aggregation of content of the log event streams for a defined length segment of the raw log file starting from a defined location in the raw log file; and
the operation to process content of the raw log file using the aggregation algorithm operationally controlled by the defined level of aggregation to generate the aggregated log file, comprises to extract the defined length segment of the raw log file starting from the defined location in the raw log file, and store the extracted defined length segment of the raw log file in the aggregated log file.

9. The IFE security processing system of Claim 1, wherein the operations further comprise to:
identify one of the log event streams based on source information contained in the aggregation command; and
process content of the raw log file that is only from the identified one of the log event streams, using the aggregation algorithm operationally controlled by the defined level of aggregation to generate the aggregated log file.

10. The IFE security processing system of Claim 1, wherein the operation to aggregate content of the log event streams based on the level of aggregation set by aggregation commands received from the ground-based cybersecurity operations center, to generate an aggregated log file, comprises to:
receive first and second aggregation commands, wherein the first aggregation command requests a first level of aggregation of content of a first group of log event streams, wherein the second aggregation command requests a second level of aggregation of content of a second group of log event streams, wherein the first level of aggregation is different than the second level of aggregation; and
process content of the first group of log event streams using an aggregation algorithm operationally controlled to provide the first level of aggregation to generate a first portion of the aggregated log file; and
process content of the second group of log event streams using the aggregation algorithm operationally controlled to provide the second level of aggregation to generate a second portion of the aggregated log file, , wherein:
the first level of aggregation operationally controls the aggregation algorithm to aggregate content over a first time interval of the first group of log event streams to provide the first level of aggregation when generating the first portion of the aggregated log file; and
the second level of aggregation operationally controls the aggregation algorithm to process content over a second time interval of the second group of log event streams to provide the second level of aggregation when generating the second portion of the aggregated log file,
wherein the first time interval has a shorter time duration than the second time interval.

11. The IFE security processing system of Claim 1, wherein the operations further comprise to:
repetitively generate updated aggregated log files at a periodic rate that is controlled based on a rate command received from the ground-based cybersecurity operations center.

12. The IFE security processing system of Claim 11, wherein the operations further comprise to:
receive a first rate command identifying a first group of log event streams that are to be aggregated together at a first rate;
receive a second rate command identifying a second group of log event streams that are to be aggregated together at a second rate;
process the first group of log event streams at the first rate to generate the updated aggregated log files; and
process the second group of log event streams at the second rate to further generate the updated aggregated log files.

13. A ground-based cybersecurity operations center comprising:
at least one processor;
at least one memory storing instructions executable by the at least one processor to perform operations comprising to:
receive an aggregated log file through a satellite communication pathway from an inflight entertainment (IFE) security processing system;
process the aggregated log file to identify a security event satisfying at least one defined security rule;
responsive to identifying the security event, generate an aggregation command to control aggregation by the IFE security processing system of content of log event streams from components of an IFE system to generate an updated aggregated log file; and
communicate the aggregation command through the satellite communication pathway to the IFE security processing system.

14. The ground-based cybersecurity operations center of Claim 13, wherein the operations further comprise to:
responsive to identifying the security event, determine a time interval over which the IFE security processing system is to perform periodic aggregation of content of the log event streams to generate updated aggregated log files; and
communicate the determined time interval in a correlation command that controls correlation by the IFE security processing system of content of individual ones of the log event streams, wherein the correlation rule is communicated through the satellite communication pathway to the IFE security processing system.

15. The ground-based cybersecurity operations center of Claim 13, wherein the operations further comprise to:
responsive to identifying the security event, select a group of the log event streams in which the IFE security processing system is to perform aggregation of content to generate the updated aggregated log file; and
communicate the selected group of the log event streams in a correlation command that controls correlation by the IFE security processing system of content of selected group of the log event streams, wherein the correlation rule is communicated through the satellite communication pathway to the IFE security processing system.

16. The ground-based cybersecurity operations center of Claim 13, wherein the operations further comprise to:
responsive to identifying the security event, generate the aggregation command to request a defined level of aggregation of content of the log event streams by the IFE security processing system processing content of a raw log file using an aggregation algorithm operationally controlled by the defined level of aggregation to generate the updated aggregated log file; and
communicate the aggregation command through the satellite communication pathway to the IFE security processing system.

## Patentansprüche

1. Sicherheitsverarbeitungssystem für Unterhaltung während des Fluges, IFE-Sicherheitsverarbeitungssystem, das umfasst:
mindestens einen Prozessor;
mindestens einen Speicher, der Anweisungen speichert, die durch den mindestens einen Prozessor ausführbar sind, um Operationen durchzuführen, die umfassen:
Empfangen von Protokollereignisströmen von Komponenten eines IFE-Systems und/oder mit dem IFE-System verbundenen Komponenten;
Aggregieren von Inhalt der Protokollereignisströme basierend auf einer Aggregationsebene, die durch Aggregationsbefehle festgelegt wird, die von einem bodenbasierten Cybersicherheitsoperationszentrum empfangen werden, um eine aggregierte Protokolldatei zu erzeugen;
Kommunizieren der aggregierten Protokolldatei über einen Satellitenkommunikationspfad an das bodenbasierte Cybersicherheitsoperationszentrum und
Speichern von Inhalt der Protokollereignisströme in einer Rohprotokolldatei,
wobei die Operation zum Aggregieren von Inhalt der Protokollereignisströme basierend auf der Aggregationsebene, die durch Aggregationsbefehle festgelegt wird, die vom bodenbasierten Cybersicherheitsoperationszentrum empfangen werden, um eine aggregierte Protokolldatei zu erzeugen, umfasst:
Empfangen eines Aggregationsbefehls, der eine definierte Aggregationsebene von Inhalt der Protokollereignisströme anfordert; und
Verarbeiten des Inhalts der Rohprotokolldatei unter Verwendung eines Aggregationsalgorithmus, der operativ durch die definierte Aggregationsebene gesteuert wird, um die aggregierte Protokolldatei zu erzeugen.

2. IFE-Sicherheitsverarbeitungssystem nach Anspruch 1, wobei die Operationen ferner umfassen:
Korrelieren von Inhalt der Protokollereignisströme basierend auf einer Korrelationsregel mit Parametern, die basierend auf Korrelationsbefehlen definiert sind, die vom bodenbasierten Cybersicherheitsoperationszentrum empfangen werden.

3. IFE-Sicherheitsverarbeitungssystem nach Anspruch 2, wobei die Operation zum Korrelieren von Inhalt der Protokollereignisströme basierend auf der Korrelationsregel mit Parametern, die basierend auf Korrelationsbefehlen definiert sind, die vom bodenbasierten Cybersicherheitsoperationszentrum empfangen werden, umfasst:
Korrelieren von Inhalt einzelner der Protokollereignisströme über ein Zeitintervall, das durch die Korrelationsbefehle definiert ist, die vom bodenbasierten Cybersicherheitsoperationszentrum empfangen werden, um die aggregierte Protokolldatei mit dem korrelierten Inhalt zu erzeugen.

4. IFE-Sicherheitsverarbeitungssystem nach Anspruch 3, wobei die Operation zum Korrelieren von Inhalt einzelner der Protokollereignisströme über ein Zeitintervall, das durch die Korrelationsbefehle definiert ist, die vom bodenbasierten Cybersicherheitsoperationszentrum empfangen werden, um die aggregierte Protokolldatei mit dem korrelierten Inhalt zu erzeugen, umfasst:
Empfangen eines ersten und eines zweiten Korrelationsbefehls, wobei der erste Korrelationsbefehl eine Korrelation einer ersten Gruppe von Protokollereignisströmen über ein erstes Zeitintervall anfordert und der zweite Korrelationsbefehl eine Korrelation von Inhalt einer zweiten Gruppe von Protokollereignisströmen anfordert, wobei sich das erste Zeitintervall vom zweiten Zeitintervall unterscheidet, wobei die erste Gruppe von Protokollereignisströmen mindestens einige andere Protokollereignisströme als die zweite Gruppe von Protokollereignisströmen enthält;
Korrelieren von Inhalt einzelner der Protokollereignisströme in der ersten Gruppe über das erste Zeitintervall und
Korrelieren von Inhalt einzelner der Protokollereignisströme in der zweiten Gruppe über das zweite Zeitintervall.

5. IFE-Sicherheitsverarbeitungssystem nach Anspruch 2, wobei die Operation zum Korrelieren von Inhalt der Protokollereignisströme basierend auf der Korrelationsregel mit Parametern, die basierend auf Korrelationsbefehlen definiert sind, die vom bodenbasierten Cybersicherheitsoperationszentrum empfangen werden, umfasst:
Auswählen einer Gruppe der Protokollereignisströme, die durch die Korrelationsbefehle, die vom bodenbasierten Cybersicherheitsoperationszentrum empfangen werden, identifiziert werden;
Korrelieren zwischen Inhalt der ausgewählten Gruppe der Protokollereignisströme, um eine Korrelationsinhaltsdatei zu erzeugen, die Ähnlichkeiten und/oder Unterschiede zwischen dem Inhalt der ausgewählten Gruppe der Protokollereignisströme, die ein Auftreten eines Cybersicherheitsereignisses angeben, charakterisiert; und
Kommunizieren der korrelierten Inhaltsdatei über den Satellitenkommunikationspfad an das bodenbasierte Cybersicherheitsoperationszentrum.

6. IFE-Sicherheitsverarbeitungssystem nach Anspruch 1, wobei die mit dem IFE-System verbundenen Komponenten mindestens eines einschließen von:
einer Netzwerkschnittstellensicherheitseinheit;
einem interaktiven Kabinenverwaltungsendgerät;
einem Luftfahrzeugdatenbus;
einer Sitzvideoanzeigeeinheit und
einer Touch-Passagiermedieneinheit.

7. IFE-Sicherheitsverarbeitungssystem nach Anspruch 1, wobei die Ströme von mindestens einem empfangen werden von:
einer Firewall;
einem Netzwerkangriffsdetektionssystem;
einer rollenbasierten Zugangskontrolle;
einem Secure Shell-Protokoll und
einer Antivirensoftware.

8. IFE-Sicherheitsverarbeitungssystem nach Anspruch 1, wobei:
der Aggregationsbefehl keine Aggregationsebene von Inhalt der Protokollereignisströme für ein Segment definierter Länge der Rohprotokolldatei ab einem definierten Ort in der Rohprotokolldatei anfordert; und
die Operation zum Verarbeiten von Inhalt der Rohprotokolldatei unter Verwendung des Aggregationsalgorithmus, der operativ durch die definierte Aggregationsebene gesteuert wird, um die aggregierte Protokolldatei zu erzeugen, ein Extrahieren des Segments definierter Länge der Rohprotokolldatei ab dem definierten Ort in der Rohprotokolldatei und Speichern des extrahierten Segments definierter Länge der Rohprotokolldatei in der aggregierten Protokolldatei umfasst.

9. IFE-Sicherheitsverarbeitungssystem nach Anspruch 1, wobei die Operationen ferner umfassen:
Identifizieren eines der Protokollereignisströme basierend auf Quellinformationen, die im Aggregationsbefehl enthalten sind; und
Verarbeiten von Inhalt der Rohprotokolldatei, der nur aus dem Identifizierten der Protokollereignisströme stammt, unter Verwendung des Aggregationsalgorithmus, der operativ durch die definierte Aggregationsebene gesteuert wird, um die aggregierte Protokolldatei zu erzeugen.

10. IFE-Sicherheitsverarbeitungssystem nach Anspruch 1, wobei die Operation zum Aggregieren von Inhalt der Protokollereignisströme basierend auf der Aggregationsebene, die durch Aggregationsbefehle festgelegt wird, die vom bodenbasierten Cybersicherheitsoperationszentrum empfangen werden, um eine aggregierte Protokolldatei zu erzeugen, umfasst:
Empfangen eines ersten und eines zweiten Aggregationsbefehls, wobei der erste Aggregationsbefehl eine erste Aggregationsebene von Inhalt einer ersten Gruppe von Protokollereignisströmen anfordert, wobei der zweite Aggregationsbefehl eine zweite Aggregationsebene von Inhalt einer zweiten Gruppe von Protokollereignisströmen anfordert, wobei sich die erste Aggregationsebene von der zweiten Aggregationsebene unterscheidet; und
Verarbeiten von Inhalt der ersten Gruppe von Protokollereignisströmen unter Verwendung eines Aggregationsalgorithmus, der operativ gesteuert wird, um die erste Aggregationsebene bereitzustellen, um einen ersten Abschnitt der aggregierten Protokolldatei zu erzeugen; und
Verarbeiten von Inhalt der zweiten Gruppe von Protokollereignisströmen unter Verwendung des Aggregationsalgorithmus, der operativ gesteuert wird, um die zweite Aggregationsebene bereitzustellen, um einen zweiten Abschnitt der aggregierten Protokolldatei zu erzeugen, wobei:
die erste Aggregationsebene den Aggregationsalgorithmus operativ steuert, um Inhalt über ein erstes Zeitintervall der ersten Gruppe von Protokollereignisströmen zu aggregieren, um die erste Aggregationsebene bereitzustellen, wenn der erste Abschnitt der aggregierten Protokolldatei erzeugt wird; und
die zweite Aggregationsebene den Aggregationsalgorithmus operativ steuert, um Inhalt über ein zweites Zeitintervall der zweiten Gruppe von Protokollereignisströmen zu verarbeiten, um die zweite Aggregationsebene bereitzustellen, wenn der zweite Abschnitt der aggregierten Protokolldatei erzeugt wird, wobei das erste Zeitintervall eine kürzere Zeitdauer als das zweite Zeitintervall aufweist.

11. IFE-Sicherheitsverarbeitungssystem nach Anspruch 1, wobei die Operationen ferner umfassen:
wiederholtes Erzeugen aktualisierter aggregierter Protokolldateien mit einer periodischen Rate, die basierend auf einem Ratenbefehl gesteuert wird, der vom bodenbasierten Cybersicherheitsoperationszentrum empfangen wird.

12. IFE-Sicherheitsverarbeitungssystem nach Anspruch 11, wobei die Operationen ferner umfassen:
Empfangen eines ersten Ratenbefehls, der eine erste Gruppe von Protokollereignisströmen identifiziert, die mit einer ersten Rate zusammen aggregiert werden sollen;
Empfangen eines zweiten Ratenbefehls, der eine zweite Gruppe von Protokollereignisströmen identifiziert, die mit einer zweiten Rate zusammen aggregiert werden sollen;
Verarbeiten der ersten Gruppe von Protokollereignisströmen mit der ersten Rate, um die aktualisierten aggregierten Protokolldateien zu erzeugen; und
Verarbeiten der zweiten Gruppe von Protokollereignisströmen mit der zweiten Rate, um die aktualisierten aggregierten Protokolldateien weiter zu erzeugen.

13. Bodenbasiertes Cybersicherheitsoperationszentrum, das umfasst:
mindestens einen Prozessor;
mindestens einen Speicher, der Anweisungen speichert, die durch den mindestens einen Prozessor ausführbar sind, um Operationen durchzuführen, die umfassen:
Empfangen einer aggregierten Protokolldatei über einen Satellitenkommunikationspfad von einem Sicherheitsverarbeitungssystem für Unterhaltung während des Fluges (IFE-Sicherheitsverarbeitungssystem);
Verarbeiten der aggregierten Protokolldatei, um ein Sicherheitsereignis zu identifizieren, das mindestens eine definierte Sicherheitsregel erfüllt;
als Reaktion auf das Identifizieren des Sicherheitsereignisses, Erzeugen eines Aggregationsbefehls, um eine Aggregation, durch das IFE-Sicherheitsverarbeitungssystem, von Inhalt von Protokollereignisströmen von Komponenten eines IFE-Systems zu steuern, um eine aktualisierte aggregierte Protokolldatei zu erzeugen; und
Kommunizieren des Aggregationsbefehls über den Satellitenkommunikationspfad an das IFE-Sicherheitsverarbeitungssystem.

14. Bodenbasiertes Cybersicherheitsoperationszentrum nach Anspruch 13, wobei die Operationen ferner umfassen:
als Reaktion auf das Identifizieren des Sicherheitsereignisses, Bestimmen eines Zeitintervalls, über das das IFE-Sicherheitsverarbeitungssystem eine periodische Aggregation von Inhalt der Protokollereignisströme durchführen soll, um aktualisierte aggregierte Protokolldateien zu erzeugen; und
Kommunizieren des bestimmten Zeitintervalls in einem Korrelationsbefehl, der die Korrelation, durch das IFE-Sicherheitsverarbeitungssystem, von Inhalt einzelner der Protokollereignisströme steuert, wobei die Korrelationsregel über den Satellitenkommunikationspfad an das IFE-Sicherheitsverarbeitungssystem kommuniziert wird.

15. Bodenbasiertes Cybersicherheitsoperationszentrum nach Anspruch 13, wobei die Operationen ferner umfassen:
als Reaktion auf das Identifizieren des Sicherheitsereignisses, Auswählen einer Gruppe der Protokollereignisströme, in denen das IFE-Sicherheitsverarbeitungssystem eine Aggregation von Inhalt durchführen soll, um die aktualisierte aggregierte Protokolldatei zu erzeugen; und
Kommunizieren der ausgewählten Gruppe der Protokollereignisströme in einem Korrelationsbefehl, der die Korrelation, durch das IFE-Sicherheitsverarbeitungssystem, von Inhalt einer ausgewählten Gruppe der Protokollereignisströme steuert, wobei die Korrelationsregel über den Satellitenkommunikationspfad an das IFE-Sicherheitsverarbeitungssystem kommuniziert wird.

16. Bodenbasiertes Cybersicherheitsoperationszentrum nach Anspruch 13, wobei die Operationen ferner umfassen:
als Reaktion auf das Identifizieren des Sicherheitsereignisses, Erzeugen des Aggregationsbefehls, um eine definierte Aggregationsebene von Inhalt der Protokollereignisströme anzufordern, indem das IFE-Sicherheitsverarbeitungssystem Inhalt einer Rohprotokolldatei unter Verwendung eines Aggregationsalgorithmus verarbeitet, der operativ durch die definierte Aggregationsebene gesteuert wird, um die aktualisierte aggregierte Protokolldatei zu erzeugen; und
Kommunizieren des Aggregationsbefehls über den Satellitenkommunikationspfad an das IFE-Sicherheitsverarbeitungssystem.

## Revendications

1. Système de traitement de sécurité de divertissement en vol, IFE, comprenant :
au moins un processeur ;
au moins une mémoire stockant des instructions exécutables par le ou les processeurs pour réaliser des opérations comprenant :
la réception de flux d'événements de journal en provenance de composants d'un système IFE et/ou connectés au système IFE ;
l'agrégation du contenu des flux d'événements de journal sur la base d'un niveau d'agrégation spécifié par des commandes d'agrégation reçues en provenance d'un centre d'opérations de cybersécurité basé au sol, afin de générer un fichier journal agrégé ;
la communication du fichier journal agrégé, par l'intermédiaire d'une voie de communication par satellite, au centre d'opérations de cybersécurité basé au sol ; et
le stockage du contenu des flux d'événements de journal dans un fichier journal brut,
l'opération d'agrégation de contenu des flux d'événements de journal sur la base du niveau d'agrégation spécifié par des commandes d'agrégation reçues en provenance du centre d'opérations de cybersécurité basé au sol, pour générer un fichier journal agrégé, comprenant :
la réception d'une consigne d'agrégation demandant un niveau défini d'agrégation du contenu des flux d'événements de journal ; et
le traitement du contenu du fichier journal brut à l'aide d'un algorithme d'agrégation commandé de manière opérationnelle par le niveau d'agrégation défini pour générer le fichier journal agrégé.

2. Système de traitement de sécurité d'IFE selon la revendication 1, les opérations comprenant en outre :
le fait de corréler le contenu des flux d'événements de journal sur la base d'une règle de corrélation ayant des paramètres définis sur la base de consignes de corrélation reçues en provenance du centre d'opérations de cybersécurité basé au sol.

3. Système de traitement de sécurité d'IFE selon la revendication 2, l'opération de corrélation du contenu des flux d'événements de journal, sur la base de la règle de corrélation ayant des paramètres définis sur la base de consignes de corrélation reçues en provenance du centre d'opérations de cybersécurité basé au sol, comprenant :
le fait de corréler le contenu de flux individuels parmi les flux d'événements de journal sur un intervalle de temps défini par les consignes de corrélation reçues en provenance du centre d'opérations de cybersécurité basé au sol, afin de générer le fichier journal agrégé avec le contenu corrélé.

4. Système de traitement de sécurité d'IFE selon la revendication 3, l'opération de corrélation du contenu de flux individuels parmi les flux d'événements de journal sur un intervalle de temps défini par les consignes de corrélation reçues en provenance du centre d'opérations de cybersécurité basé au sol, pour générer le fichier journal agrégé avec le contenu corrélé, comprenant :
la réception de première et seconde consignes de corrélation, la première consigne de corrélation demandant la corrélation d'un premier groupe de flux d'événements de journal sur un premier intervalle de temps et la seconde consigne de corrélation demandant la corrélation du contenu d'un second groupe de flux d'événements de journal, le premier intervalle de temps étant différent du second intervalle de temps, le premier groupe de flux d'événements de journal contenant au moins certains flux d'événements de journal différents de ceux du second groupe de flux d'événements de journal ;
le fait de corréler le contenu de flux individuels parmi les flux d'événements de journal du premier groupe au cours du premier intervalle de temps ; et
le fait de corréler le contenu de flux individuels parmi les flux d'événements de journal du second groupe sur le second intervalle de temps.

5. Système de traitement de sécurité d'IFE selon la revendication 2, l'opération de corrélation du contenu des flux d'événements de journal, sur la base de la règle de corrélation ayant des paramètres définis sur la base de consignes de corrélation reçues en provenance du centre d'opérations de cybersécurité basé au sol, comprenant :
la sélection d'un groupe des flux d'événements de journal identifiés par les consignes de corrélation reçues en provenance du centre d'opérations de cybersécurité basé au sol ;
une corrélation entre le contenu du groupe sélectionné des flux d'événements de journal afin de générer un fichier de contenu de corrélation caractérisant des similitudes et/ou des différences entre le contenu du groupe sélectionné des flux d'événements de journal qui indiquent la survenue d'un événement de cybersécurité ; et
la communication du fichier de contenu corrélé, par l'intermédiaire de la voie de communication par satellite, au centre d'opérations de cybersécurité basé au sol.

6. Système de traitement de sécurité d'IFE selon la revendication 1, les composants connectés au système IFE incluant au moins l'un des éléments suivants :
une unité de sécurité d'interface réseau ;
un terminal interactif de gestion de cabine ;
un bus de données d'aéronef,
une unité d'affichage vidéo de siège ; et
une unité multimédia tactile pour passager.

7. Système de traitement de sécurité d'IFE selon la revendication 1, les flux étant reçus en provenance d'au moins l'un des éléments suivants :
un pare-feu ;
un système de détection d'intrusion dans le réseau ;
un contrôle d'accès basé sur les rôles ;
un protocole Secure Shell ; et
un logiciel antivirus.

8. Système de traitement de sécurité d'IFE selon la revendication 1 :
la consigne d'agrégation ne demandant aucun niveau d'agrégation du contenu des flux d'événements de journal pour un segment de longueur définie du fichier journal brut à partir d'un emplacement défini dans le fichier journal brut ; et
l'opération de traitement du contenu du fichier journal brut à l'aide de l'algorithme d'agrégation commandé de manière opérationnelle par le niveau d'agrégation défini, afin de générer le fichier journal agrégé, comprenant l'extraction du segment de longueur définie du fichier journal brut à partir de l'emplacement défini dans le fichier journal brut, et le stockage du segment de longueur définie extrait du fichier journal brut dans le fichier journal agrégé.

9. Système de traitement de sécurité d'IFE selon la revendication 1, les opérations comprenant en outre :
l'identification de l'un des flux d'événements de journal en fonction d'informations de source contenues dans la consigne d'agrégation ; et
le traitement du contenu du fichier journal brut qui provient uniquement du flux identifié parmi les flux d'événements de journal, en utilisant l'algorithme d'agrégation commandé de manière opérationnelle par le niveau d'agrégation défini pour générer le fichier journal agrégé.

10. Système de traitement de sécurité d'IFE selon la revendication 1, l'opération d'agrégation de contenu des flux d'événements de journal sur la base du niveau d'agrégation spécifié par des commandes d'agrégation reçues en provenance du centre d'opérations de cybersécurité basé au sol, pour générer un fichier journal agrégé, comprenant :
la réception de première et seconde commandes d'agrégation, la première consigne d'agrégation demandant un premier niveau d'agrégation de contenu d'un premier groupe de flux d'événements de journal, la seconde consigne d'agrégation demandant un second niveau d'agrégation de contenu d'un second groupe de flux d'événements de journal, le premier niveau d'agrégation étant différent du second niveau d'agrégation ; et
le traitement du contenu du premier groupe de flux d'événements de journal à l'aide d'un algorithme d'agrégation commandé de manière opérationnelle pour fournir le premier niveau d'agrégation afin de générer une première partie du fichier journal agrégé ; et
le traitement du contenu du second groupe de flux d'événements de journal à l'aide de l'algorithme d'agrégation commandé de manière opérationnelle pour fournir le second niveau d'agrégation afin de générer une seconde partie du fichier journal agrégé, où :
le premier niveau d'agrégation commande de manière opérationnelle l'algorithme d'agrégation pour agréger le contenu sur un premier intervalle de temps du premier groupe de flux d'événements de journal afin de fournir le premier niveau d'agrégation lors de la génération de la première partie du fichier journal agrégé ; et
le second niveau d'agrégation commande de manière opérationnelle l'algorithme d'agrégation pour traiter le contenu sur un second intervalle de temps du second groupe de flux d'événements de journal afin de fournir le second niveau d'agrégation lors de la génération de la seconde partie du fichier journal agrégé,
le premier intervalle de temps ayant une durée plus courte que le deuxième intervalle de temps.

11. Système de traitement de sécurité d'IFE selon la revendication 1, les opérations comprenant en outre :
la génération répétitive de fichiers journaux agrégés mis à jour à une cadence périodique qui est commandée sur la base d'une consigne de cadence reçue en provenance du centre d'opérations de cybersécurité basé au sol.

12. Système de traitement de sécurité d'IFE selon la revendication 11, les opérations comprenant en outre :
la réception d'une première consigne de cadence identifiant un premier groupe de flux d'événements de journal qui doivent être agrégés ensemble à une première cadence ;
la réception d'une seconde consigne de cadence identifiant un second groupe de flux d'événements de journal qui doivent être agrégés ensemble à une seconde cadence ;
le traitement du premier groupe de flux d'événements de journal à la première cadence pour générer les fichiers journaux agrégés mis à jour ; et
le traitement du second groupe de flux d'événements de journal à la seconde cadence afin de générer encore les fichiers journaux agrégés mis à jour.

13. Centre d'opérations de cybersécurité basé au sol comprenant :
au moins un processeur ;
au moins une mémoire stockant des instructions exécutables par le ou les processeurs pour réaliser des opérations comprenant :
la réception d'un fichier journal agrégé par l'intermédiaire d'une voie de communication par satellite en provenance d'un système de traitement de sécurité de divertissement en vol (IFE) ;
le traitement du fichier journal agrégé pour identifier un événement de sécurité satisfaisant au moins une règle de sécurité définie ;
en réponse à l'identification de l'événement de sécurité, la génération d'une consigne d'agrégation pour commander l'agrégation, par le système de traitement de sécurité d'IFE, du contenu de flux d'événements de journal provenant de composants d'un système IFE afin de générer un fichier journal agrégé mis à jour ; et
la communication de la consigne d'agrégation, par l'intermédiaire de la voie de communication par satellite, au système de traitement de sécurité d'IFE.

14. Centre d'opérations de cybersécurité basé au sol selon la revendication 13, les opérations comprenant en outre :
en réponse à l'identification de l'événement de sécurité, la détermination d'un intervalle de temps pendant lequel le système de traitement de sécurité d'IFE doit effectuer une agrégation périodique du contenu des flux d'événements de journal afin de générer des fichiers journaux agrégés mis à jour ; et
la communication de l'intervalle de temps déterminé dans une consigne de corrélation qui commande la corrélation par le système de traitement de sécurité d'IFE du contenu de flux individuels parmi les flux d'événements journaux, la règle de corrélation étant communiquée par l'intermédiaire de la voie de communication par satellite au système de traitement de sécurité d'IFE.

15. Centre d'opérations de cybersécurité basé au sol selon la revendication 13, les opérations comprenant en outre :
en réponse à l'identification de l'événement de sécurité, la sélection d'un groupe des flux d'événements de journal dans lequel le système de traitement de sécurité d'IFE doit effectuer une agrégation de contenu pour générer le fichier journal agrégé mis à jour ; et
la communication du groupe sélectionné des flux d'événements de journal dans une consigne de corrélation qui commande la corrélation par le système de traitement de sécurité d'IFE du contenu du groupe sélectionné des flux d'événements de journal, la règle de corrélation étant communiquée au système de traitement de sécurité d'IFE par l'intermédiaire de la voie de communication par satellite.

16. Centre d'opérations de cybersécurité basé au sol selon la revendication 13, les opérations comprenant en outre :
en réponse à l'identification de l'événement de sécurité, la génération de la consigne d'agrégation pour demander un niveau défini d'agrégation du contenu des flux d'événements de journal par le système de traitement de sécurité d'IFE traitant le contenu d'un fichier journal brut au moyen d'un algorithme d'agrégation commandé de manière opérationnelle par le niveau défini d'agrégation pour générer le fichier journal agrégé mis à jour ; et
la communication de la consigne d'agrégation, par l'intermédiaire de la voie de communication par satellite, au système de traitement de sécurité d'IFE.
